# EUROPÄISCHE PATENTSCHRIFT

(11) **EP 3 201 108 B1**
(45) Veröffentlichungstag und Bekanntmachung des Hinweises auf die Patenterteilung: **28.06.2023**
(21) Anmeldenummer: 15771535.0
(22) Anmeldetag: 16.09.2015
(51) Int. Cl.: B65G 49/04

(54) **FÖRDERSYSTEM FÜR WERKSTÜCKE**
CONVEYOR SYSTEM FOR WORKPIECES
SYSTÈME DE TRANSPORT DE PIECES

(30) Priorität: 30.09.2014 DE 102014014137
(43) Veröffentlichungstag der Anmeldung: 09.08.2017
(73) Patentinhaber: Dürr Systems AG, 74321 Bietigheim-Bissingen (DE)
(72) Erfinder: BLUM, Edgar, 36355 Grebenhain (DE); IZOS, Marina, 71711 Murr (DE); KINCSES, Michael, 70327 Stuttgart (DE)
(74) Vertreter: Kreiser, André Manfred
(86) Internationale Anmeldenummer: PCT/EP2015/071241
(87) Internationale Veröffentlichungsnummer: WO 2016/050516

(56) Entgegenhaltungen:
- EP-B1- 1 747 156
- WO-A1-01/17691
- WO-A1-02/088007
- DE-A1- 19 641 048
- DE-C2- 19 641 048

## Beschreibung

Die vorliegende Erfindung betrifft ein Fördersystem für Werkstücke, beispielsweise zum Transportieren von Fahrzeugkarosserien, mit einer Förderstrecke, einem Antriebssystem und einem Fahrwagen. Ein solches Fördersystem ist vorzugsweise Teil einer Anlage zur Oberflächenbehandlung von Werkstücken, zum Beispiel in einer Lackiererei. Insbesondere kann es sich bei der Anlage um eine Anlage zur Tauchvorbehandlung und/oder zur Tauchlackierung handeln. In einer solchen Anlage werden zu behandelnde Werkstücke zumindest zeit- und/oder abschnittsweise in einen mit einer Behandlungsflüssigkeit gefüllten Behandlungsbehälter eingebracht und nach der Behandlung wieder ausgebracht. Dies ermöglicht beispielsweise eine Vorbehandlung und/oder Beschichtung auch in schwer zugänglichen Engstellen und Hohlräumen des Werkstücks.

Ein Fördersystem für Werkstücke ist beispielsweise aus der EP1747156B1 bekannt und weist mehrere Fahrwagen auf, die entlang des Behandlungsbehälters bewegbar sind. Die Fahrwagen sind zweiteilig aus einer schienengebundenen Translationseinheit und einer darauf beweglich angeordneten Rotationseinheit ausgebildet. Die beiden Einheiten des Fahrwagens stehen über eine Welle miteinander in Verbindung. Die Translationseinheit weist eine Antriebseinheit auf, die eine translatorische Bewegung des Fahrwagens entlang des Behandlungsbehälters ermöglicht. Jeweils am Anfang und am Ende des Behandlungsbehälters wird mit Hilfe einer weiteren Antriebseinheit eine Rotation der Rotationseinheit ausgeführt. Durch diese Rotation werden an der Rotationseinheit lösbar befestigte Werkstücke in den Behandlungsbehälter ein- und aus diesem wieder ausgebracht.

Ein Fördersystem sowie ein Verfahren zum Betreiben eines Fördersystems für Werkstücke gemäß dem Oberbegriff der Ansprüche 1 und 7 ist weiterhin aus der WO 01/17691 und aus der WO 98/15359 bekannt und weist ebenfalls eine Förderstrecke, ein Antriebssystem und einen Fahrwagen auf. Entlang der Förderstrecke ist ein Führungselement vorhanden, das als Führungsabschnitt ausgebildet ist, und am Fahrwagen ist ein Führungselement vorhanden, das als geführtes Element ausgebildet ist. Der Führungsabschnitt und das geführte Element stehen miteinander in Eingriff, wobei das geführte Element vom Führungsabschnitt geführt ist, während der Fahrwagen vom Antriebssystem entlang der Förderstrecke bewegt wird. Der vorliegenden Erfindung liegt die Aufgabe zugrunde, ein Fördersystem für Werkstücke bereitzustellen, das für verschiedene Werkstücke flexibel einsetzbar und bei wechselnder Auslastung der Anlage effizient betreibbar ist.

Diese Aufgabe wird erfindungsgemäß gelöst durch ein gattungsgemäßes Fördersystem für Werkstücke gemäß Anspruch 1, sowie ein Verfahren zum Betreiben eines Fördersystems für Werkstücke gemäß Anspruch 7.

Dabei fördert das Fördersystem zu behandelnde Werkstücke mittels des Fahrwagens durch die Anlage zur Oberflächenbehandlung. Die Förderstrecke kann als Schienensystem ausgestaltet sein, entlang dessen ein oder mehrere Fahrwagen, angetrieben vom Antriebssystem, gefördert werden. Die Förderstrecke erstreckt sich vorzugsweise entlang eines Behandlungsbehälters. Ein Schienenabschnitt des Schienensystems dient dem Fahrwagen während des Transports entlang des Behandlungsbehälters zumindest teilweise und/oder abschnittsweise als Auflagefläche.

Das Antriebssystem weist eine Antriebseinheit und vorzugsweise eine Vorrichtung zur Kraftübertragung auf. Es stellt mit Hilfe der Antriebseinheit Antriebsenergie bereit und überträgt diese mittels der Vorrichtung zur Kraftübertragung, um einen oder mehrere Fahrwagen entlang der Förderstrecke zu bewegen. Die Antriebseinheit kann als Motor, vorzugsweise als Elektromotor, ausgebildet sein. Das Antriebssystem, insbesondere die Vorrichtung zur Kraftübertragung, ist zum Beispiel auf einer Seite oder auf beiden Seiten einer Hilfsebene vorgesehen. Als Hilfsebene ist beispielsweise die vertikale Mittelebene des Behandlungsbehälters gewählt, die sich in der bevorzugten Förderrichtung erstreckt. In einer Anlage, bei der mehrere Fahrwagen vorgesehen sind, haben einige Fahrwagen vorzugsweise den gleichen und/oder einen gleichbleibenden Abstand zueinander: Sie bewegen sich bevorzugt mit derselben Geschwindigkeit entlang der Förderstrecke. Der Fahrwagen ist zweiteilig ausgebildet und weist eine schienengebundene Translationseinheit sowie eine darauf beweglich angeordnete Rotationseinheit auf. Die Rotationseinheit umfasst eine Welle, die an der Translationseinheit drehbar gelagert ist. Durch eine zentrale Längsachse dieser Welle verläuft eine Rotationsachse der Rotationseinheit. Die Rotationseinheit kann um diese Rotationsachse gedreht werden.

Die Rotationseinheit weist eine Vorrichtung zur Aufnahme eines Werkstücks auf, an der das Werkstück mittels eines Tragrahmens für ein Werkstück lösbar befestigt ist.

Die Translationseinheit umfasst ein Stützelement und ein Verbindungselement. Das Verbindungselement verbindet das Stützelement mit der Welle der Rotationseinheit.

Die Translationseinheit rollt auf einem Schienenabschnitt entlang des Behandlungsbehälters. Die Rotationseinheit wird zumindest an einem Abschnitt der Förderstrecke in Rotation versetzt. Dabei wird das Werkstück in den Behandlungsbehälter hinein bewegt und zumindest teilweise, vorzugsweise vollständig, in eine darin befindliche Behandlungsflüssigkeit eingetaucht.

Die Führungseinheit weist erfindungsgemäß eine Verstellvorrichtung für mindestens eines der Führungselemente auf. Die Verstellvorrichtung verstellt das Führungselement mit Hilfe eines Antriebselements zwischen mindestens zwei Arbeitspositionen. Hierfür stehen die Verstellvorrichtung und das Führungselement über eine Einheit zur Kraftübertragung miteinander in einer kraftschlüssigen Verbindung.

Die Führungselemente dienen bei der Rotation und bei der Translation des Fahrwagens der Kraft- und/oder Momentenübertragung zwischen dem Fahrwagen und dem Antriebssystem. Vorzugsweise wird ein Führungselement, das am Fahrwagen, insbesondere an der Rotationseinheit des Fahrwagens, befestigt ist, über ein Führungselement des Antriebssystems betätigt, wobei das Führungselement des Antriebssystems auf die Rotationseinheit des Fahrwagens einwirkt. Dabei stehen das Führungselement des Antriebssystems und das Führungselement des Fahrwagens miteinander in Eingriff, wobei das Führungselement des Fahrwagens vom Führungselement des Antriebssystems zwangsgeführt wird.

In weiterer Ausgestaltung der Erfindung ist eine Verstellvorrichtung zum Verstellen des Führungselements zwischen den Arbeitspositionen vorhanden, die beispielsweise ein Antriebselement, eine Einheit zur Kraftübertragung und/oder einen Abschnitt zum Führen des Führungselements aufweist.

Das Antriebselement der Verstellvorrichtung kann einen Motor, beispielsweise einen Elektromotor, aufweisen. Das Antriebselement stellt Antriebsenergie bereit und überträgt diese mittels der Einheit zur Kraftübertragung auf das verstellbare Führungselement.

Die Einheit zur Kraftübertragung kann eine Kraft beispielsweise mechanisch vom Antriebselement auf einen Abschnitt zum Führen der Verstellvorrichtung und/oder auf das verstellbare Führungselement übertragen. Auch eine elektrische, hydraulische, magnetische und/oder pneumatische Kraftübertragung ist möglich. Eine mechanische Kraftübertragung kann beispielsweise über ein Zahnrad, ein Getriebe, einen Exzenter, ein Scherensystem und/oder eine Welle erfolgen.

Der Abschnitt zum Führen des Führungselements kann beispielsweise als Schienenelement ausgebildet sein. Der Abschnitt zum Führen des Führungselements und das Führungselement stehen vorzugsweise in kraftschlüssiger Verbindung. Dadurch ist es möglich, die vom Antriebselement bereitgestellte Antriebsenergie in eine Bewegung eines Führungselements zwischen mehreren Arbeitspositionen umzusetzen.

Erfindungsgemäß ist ein Führungselement als Führungsabschnitt und ein Führungselement als geführtes Element ausgebildet, wobei der Führungsabschnitt und das geführte Element wenigstens abschnittsweise miteinander in Eingriff stehen.

Ein Führungsabschnitt kann als mehrseitig geschlossenes Profilelement, beispielsweise als U-Profilelement, und/oder als mehrseitiges Zwangsführungselement ausgestaltet sein. Alternativ oder zusätzlich kann ein Führungsabschnitt zumindest abschnittsweise als Anschlag ausgestaltet sein.

Entlang der Förderstrecke können einer oder mehrere Führungsabschnitte angebracht sein. Mehrere Führungsabschnitte können in Förderrichtung sequenziell hintereinander, und/oder parallel nebeneinander angebracht sein. Verschiedene Führungsabschnitte sind vorzugsweise unterschiedlich lang ausgebildet.

Ein geführtes Element ist beispielsweise als Rollenelement ausgebildet. Alternativ oder zusätzlich zum Rollenelement kann ein Gleitelement eingesetzt werden. Ein Gleitelement ist vorzugsweise aus einem Material gefertigt, das gegenüber dem Material eines Führungsabschnitts einen niedrigeren Reibungskoeffizienten aufweist. Ein Beispiel für ein entsprechendes Materialpaar ist Polytetrafluorethylen (PTFE) als Material für das Gleitelement sowie Stahl als Material für den Führungsabschnitt.

Alternativ oder zusätzlich können ein Rollenelement und/oder ein Gleitelement einen Schmierfilm aufweisen, der von einem organischen oder anorganischen Hilfsstoff oder von einem Hilfsstoff-Gemisch gebildet sein kann.

Eine an der Rotationseinheit des Fahrwagens angebrachte Hebelvorrichtung weist eines oder mehrere geführte Elemente auf. Durch eine kraftschlüssige Verbindung zwischen der Hebelvorrichtung und der Rotationseinheit kann eine an der Hebelvorrichtung angreifende Kraft auf die Rotationseinheit übertragen werden. Damit laufen eine Translation der Translationseinheit und eine Rotation der Rotationseinheit zumindest abschnitts- und/oder zeitweise miteinander gekoppelt ab.

Der Hebelvorrichtung ist eine zusätzliche Hilfsebene zugeordnet. Diese Hilfsebene ist vorzugsweise als Ebene einer Hebelvorrichtung ausgebildet und steht senkrecht zur Rotationsachse. Die Ebene einer Hebelvorrichtung schneidet die Hebelvorrichtung.

Geführte Elemente der Hebelvorrichtung können auf einer oder auf beiden Seiten der Ebene einer Hebelvorrichtung vorgesehen sein. Ein Führungsabschnitt, der mit einem bestimmten geführten Element in Eingriff gelangen können soll, ist vorzugsweise auf derselben Seite der Ebene einer Hebelvorrichtung angeordnet wie dieses bestimmte geführte Element.

Ein Eingriff zwischen dem geführten Element und dem Führungsabschnitt bewirkt vorzugsweise eine Führung des geführten Elements durch den Führungsabschnitt, insbesondere bei einer Bewegung des Fahrwagens entlang eines festgelegten Weges. Als festgelegter Weg dient beispielsweise die Förderstrecke eines Fördersystems.

Am Antriebssystem und/oder am Fahrwagen angebrachte Führungselemente können einseitig oder beidseitig der vertikalen Mittelebene vorgesehen sein. Beispielsweise weist ein Antriebssystem auf einer in Förderrichtung betrachtet ersten (rechten) Seite der vertikalen Mittelebene einen oder mehrere Führungsabschnitte auf. Vorzugsweise weist in diesem Fall ein Fahrwagen eines oder mehrere Führungselemente auf derselben ersten Seite der vertikalen Mittelebene auf.

Alternativ oder zusätzlich weist das Antriebssystem auf einer in Förderrichtung betrachtet zweiten (linken) Seite der vertikalen Mittelebene einen oder mehrere Führungsabschnitte auf. Vorzugsweise weist in diesem Fall der Fahrwagen eines oder mehrere Führungselemente auf derselben zweiten Seite der vertikalen Mittelebene auf.

Besonders bevorzugt sind Führungselemente an einem Fahrwagen auf der ersten Seite der vertikalen Mittelebene angebracht. Führungselemente an einem weiteren, zum ersten Fahrwagen beabstandet angeordneten Fahrwagen sind auf der zweiten Seite der vertikalen Mittelebene angebracht. Am Antriebssystem angebrachte Führungselemente sind in diesem Fall vorzugsweise auf der ersten und auf der zweiten Seite der vertikalen Mittelebene vorgesehen.

In weiterer Ausgestaltung der Erfindung weist die Führungseinheit mindestens zwei Führungsabschnitte auf, die zueinander unterschiedlich konfiguriert sind und/oder einen Führungsabschnitt, der sich entlang der Förderstrecke erstreckt und an verschiedenen Stellen der Förderstrecke unterschiedlich konfiguriert ist.

Folgende Ausgestaltungen von Führungsabschnitten sind jeweils für sich genommen oder in einer Kombination erfindungsgemäß einsetzbar:
Der Führungsabschnitt ist in einer ersten Ausgestaltung im Wesentlichen gerade ausgebildet, um eine Translation des Fahrwagens zu unterstützen. Ein solcher Führungsabschnitt wird Geradführungsabschnitt genannt. Dabei wird ein geführtes Element des Fahrwagens vom Geradführungsabschnitt weitgehend linear und vorzugsweise in einer vertikalen Ebene zweiseitig geführt. Eine solche Führung kann insbesondere weitgehend parallel zum Boden, parallel zur Förderstrecke und/oder senkrecht zur Rotationsachse erfolgen. Im Betrieb wird dabei die Translationseinheit des Fahrwagens entlang der Förderstrecke bewegt, wobei die Position der Rotationseinheit relativ zur Translationseinheit im Wesentlichen unverändert bleibt. Ein auf der Rotationseinheit befestigtes Werkstück weist dabei beispielsweise eine im Wesentlichen horizontale und/oder gleichbleibende Ausrichtung auf.

Der Führungsabschnitt ist in einer zweiten Ausgestaltung gebogen und/oder gekrümmt ausgebildet und weist an einer Austrittsöffnung, an der ein geführtes Element freigegeben werden kann, eine Querschnittserweiterung auf. Der Führungsabschnitt ist beispielsweise als ein Auslauf-Trichter ausgebildet. Ein geführtes Element wird von diesem Führungsabschnitt vorzugsweise in einer vertikalen Ebene zweiseitig zwangsgeführt, folgt dadurch der Biegung und/oder der Krümmung des Führungsabschnitts und wird dabei in der vertikalen Ebene angehoben oder abgesenkt. Eine solchermaßen erzeugte vertikale Verlagerung des geführten Elements wird - sofern das geführte Element über eine Hebelvorrichtung mit der Rotationseinheit verbunden ist - mit Hilfe der Hebelvorrichtung in ein Drehmoment gewandelt, das auf die Rotationseinheit des Fahrwagens übertragen werden kann, sodass die Rotationseinheit rotiert und/oder verschwenkt wird.

Der Führungsabschnitt ist in einer dritten Ausgestaltung V-förmig, beispielsweise als V-Führungsabschnitt, ausgebildet. Ein solcher V-Führungsabschnitt weist beispielhaft zwei gerade Segmente auf, die winklig zueinander aneinandergefügt sind. Ein in Förderrichtung betrachtet erstes Segment des V-Führungsabschnitts ist dabei nach unten ausgerichtet, während ein in Förderrichtung betrachtet zweites Segment nach oben ausgerichtet ist. Der V-Führungsabschnitt führt ein geführtes Element zwangsweise in einer vertikalen Ebene. Das geführte Element folgt der V-Form des V-Führungsabschnitts und wird dabei zunächst abwärts in Richtung des Bodens sowie anschließend aufwärts vom Boden weg bewegt. Die Hebelvorrichtung überträgt das Drehmoment auf die Rotationseinheit des Fahrwagens und die Rotationseinheit rotiert. Vorzugsweise rotiert die Rotationseinheit um ungefähr 180 Grad. Besonders bevorzugt rotiert die Rotationseinheit im ersten Segment des V-Führungsabschnitts um ungefähr 90 Grad, und im zweiten Segment des V-Führungsabschnitts ungefähr um weitere 90 Grad. Ein V-Führungsabschnitt kann im Bereich der Eintrittsöffnung und/oder der Austrittsöffnung eine Änderung im Querschnitt aufweisen.

Insbesondere kann eine Änderung im Querschnitt im Bereich der Eintrittsöffnung in Bewegungsrichtung des geführten Elements in Form einer Querschnittsverringerung vorliegen, zum Beispiel um bei einem geführten Element eine Zentrierwirkung zu erzielen. Weiterhin kann eine Änderung im Querschnitt im Bereich der Austrittsöffnung in Bewegungsrichtung des geführten Elements betrachtet in Form einer Querschnittserweiterung vorliegen, um ein geführtes Element freizugeben.

Alternativ oder zusätzlich weist ein V-Führungsabschnitt zwei gerade Segmente auf, die winklig zueinander aneinandergefügt sind, wobei ein in Förderrichtung betrachtet erstes Segment des V-Führungsabschnitts nach oben und ein in Förderrichtung betrachtet zweites Segment nach unten ausgerichtet ist.

Der Führungsabschnitt ist in einer vierten Ausgestaltung als Zwischenführungsabschnitt ausgebildet. Der Zwischenführungsabschnitt weist dabei ein weitgehend gerades Schienensegment auf, das als einseitiger Anschlag für ein geführtes Element dient. Das geführte Element wird vom Zwischenführungsabschnitt zwangsgeführt und dabei in Richtung des Bodens bewegt. Der Zwischenführungsabschnitt bewirkt durch die Zwangsführung des geführten Elements eine Fortsetzung der Rotation der Rotationseinheit.

Der Führungsabschnitt ist in einer fünften Ausgestaltung gebogen ausgebildet und weist an einer Eintrittsöffnung, an der ein geführtes Element mit dem Führungsabschnitt in Eingriff gelangt, eine Querschnittsverringerung auf. Die Querschnittsverringerung erfüllt eine Zentrierwirkung hinsichtlich des geführten Elements. Der Führungsabschnitt ist vorzugsweise als ein Einlauf-Trichter ausgebildet. Ein geführtes Element wird von diesem Führungsabschnitt vorzugsweise in einer vertikalen Ebene zweiseitig zwangsgeführt, folgt dadurch der Biegung des Führungsabschnitts und wird dabei in der vertikalen Ebene angehoben oder abgesenkt. Die vertikale Verlagerung des geführten Elements wird mit Hilfe der Hebelvorrichtung in ein Drehmoment gewandelt, das auf die Rotationseinheit des Fahrwagens übertragen werden kann, sodass die Rotationseinheit rotiert und/oder verschwenkt wird.

Der Führungsabschnitt ist in einer sechsten Ausgestaltung S-förmig, beispielsweise als S-Führungsabschnitt oder als Überlauftrichter, ausgestaltet. Ein S-Führungsabschnitt weist an einer Eintrittsöffnung, an der ein geführtes Element mit dem Führungsabschnitt in Eingriff gelangt, eine Querschnittsverringerung auf. Die Querschnittsverringerung übt eine Zentrierwirkung auf das geführte Element aus. Zumindest optional weist der Führungsabschnitt an einer Austrittsöffnung, an der ein geführtes Element freigegeben werden kann, eine Querschnittserweiterung auf. Ein geführtes Element wird an der Eintrittsöffnung des Führungsabschnitts zentriert und folgt zwangsgeführt der S-Form des Führungsabschnitts. An der Austrittsöffnung des Führungsabschnitts wird das geführte Element freigegeben.

Es kann günstig sein, wenn der Führungsabschnitt in der sechsten Ausgestaltung aus zwei Führungsabschnitten und optional aus einem Verbindungsabschnitt aufgebaut ist, die aneinandergefügt sind. Vorzugsweise handelt es sich um einen Führungsabschnitt in zweiter Ausgestaltung und um einen Führungsabschnitt in fünfter Ausgestaltung, die jeweils an dem Ende aneinandergefügt sind, das dem Ende mit der Änderung des Querschnitts gegenüberliegt. Besonders bevorzugt ist der Überlauftrichter aus einem Einlauftrichter und aus einem Auslauftrichter aufgebaut.

Es kann günstig sein, wenn zwei Führungsabschnitte, insbesondere zwei Führungsabschnitte unterschiedlicher Ausgestaltung, in Förderrichtung betrachtet hintereinander angeordnet sind.

Alternativ oder zusätzlich zu diesen Ausgestaltungen von Führungsabschnitten kann ein Führungsabschnitt, insbesondere ein Führungsabschnitt, der sich über einen Teil oder über die gesamte Länge der Förderstrecke erstreckt, an verschiedenen Stellen der Förderstrecke unterschiedlich konfiguriert sein. Dabei kann ein Führungsabschnitt die Funktion von mehreren der oben beschriebenen Ausgestaltungen von Führungsabschnitten übernehmen. Ein solcher Führungsabschnitt kann beispielweise mehrere (gleichartige oder unterschiedliche) Führungsabschnitte aufweisen, die fest oder lösbar aneinandergefügt sind.

In weiterer Ausgestaltung der Erfindung weist wenigstens ein bestimmter Führungsabschnitt eine erste Arbeitsposition auf, in der dieser mit einem bestimmten geführten Element in Eingriff gebracht und ein Verstellen des Fahrwagens erzielt werden kann, während der Fahrwagen an einer bestimmten Stelle entlang der Förderstrecke positioniert ist, und eine zweite Arbeitsposition, in der das geführte Element freigegeben ist, während der Fahrwagen an der bestimmten Stelle entlang der Förderstrecke positioniert ist.

Vorzugsweise unterscheiden sich die Arbeitspositionen in der räumlichen Lage und/oder Ausrichtung des Führungsabschnitts relativ zum Fahrwagen und/oder zum Behandlungsbehälter.

Eine erste Arbeitsposition des Führungsabschnitts ist beispielsweise eine Eingriffsposition. Eine Eingriffsposition ist vorzugsweise eine Position, in der der Führungsabschnitt durch Zwangsführung des geführten Elements ein Drehmoment auf die Rotationseinheit des Fahrwagens überträgt. In der ersten Arbeitsposition befindet sich der Führungsabschnitt an einer Stelle innerhalb des vom geführten Element während seiner Bewegung entlang der Förderstrecke überstrichenen Bereichs. Der Führungsabschnitt und das geführte Element stehen hierbei wenigstens vorübergehend miteinander in Eingriff. Nach dem Passieren des Führungsabschnitts wird das geführte Element vom Führungsabschnitt freigegeben.

Eine zweite Arbeitsposition des Führungsabschnitts ist beispielsweise eine Nichteingriffsposition. Eine Nichteingriffsposition ist vorzugsweise eine Position, in der der Führungsabschnitt und das geführte Element nicht miteinander in Eingriff stehen und nicht miteinander in Eingriff gelangen. Das geführte Element wird dabei nicht vom Führungsabschnitt geführt, sondern es passiert die Position, an der sich der Führungsabschnitt befindet, wenn er die Eingriffsposition eingenommen hat, ohne mit diesem in Eingriff zu gelangen. In der zweiten Arbeitsposition befindet sich der Führungsabschnitt an einer Stelle außerhalb des vom geführten Element während seiner Bewegung entlang der Förderstrecke überstrichenen Bereichs.

Eine zweite Arbeitsposition kann alternativ auch eine weitere, im Hinblick auf die erste Arbeitsposition andere, zweite Eingriffsposition darstellen.

Ein Verstellen des Führungsabschnitts zwischen den Arbeitspositionen erfolgt bevorzugt, während das geführte Element nicht mit dem Führungsabschnitt in Eingriff steht.

Steht das geführte Element nicht mit dem Führungsabschnitt in Eingriff, kann es in einer besonderen Ausgestaltung der Erfindung von Vorteil sein, wenn dieses und/oder ein weiteres geführtes Element gleichzeitig mit einem anderen Führungsabschnitt in Eingriff steht.

In weiterer Ausgestaltung der Erfindung erfolgt das Verstellen eines Führungsabschnitts, während ein geführtes Element mit diesem Führungsabschnitt in Eingriff steht.

Wenn das geführte Element vom Führungsabschnitt zwangsgeführt wird, bewirkt das gleichzeitige Verstellen dieses Führungsabschnitts eine zusätzliche Kraft- und/oder Momentenübertragung auf das geführte Element. Vorzugsweise wird über die Hebelvorrichtung ein Drehmoment auf die Rotationseinheit des Fahrwagens übertragen. Die daraus folgende Rotation der Rotationseinheit kann ein auf der Rotationseinheit festgelegtes Werkstück in eine vorgegebene Position bringen.

Die relative Position der Rotationseinheit gegenüber der Translationseinheit kann damit alternativ oder zusätzlich zur Beeinflussung durch die Form des Führungsabschnitts durch die Position des Führungsabschnitts beeinflusst werden.

Wird ein Werkstück durch Rotation der Rotationseinheit in eine in einem Behandlungsbehälter angeordnete Behandlungsflüssigkeit eingetaucht, sollen auch Spalte, Engstellen, Hohlräume und andere schwer zugängliche Bereiche des Werkstücks hinreichend mit Behandlungsflüssigkeit benetzt werden. Dafür ist es von Vorteil, wenn die Rotationseinheit des Fahrwagens während der Translation des Fahrwagens und des sich innerhalb der Behandlungsflüssigkeit befindlichen Werkstücks einmal oder mehrmals zwischen verschiedenen Positionen verstellt wird. Ein mehrmaliges Verstellen des Führungsabschnitts zwischen zwei Arbeitspositionen bewirkt zum Beispiel eine reversierende Rotation der Rotationseinheit, sodass Luftblasen verschoben und/oder abgeschüttelt werden können und Behandlungsflüssigkeit an deren Stelle gelangen kann.

Wird ein Werkstück durch Rotation der Rotationseinheit aus einer in einem Behandlungsbehälter angeordneten Behandlungsflüssigkeit ausgebracht, soll die vom Werkstück aus dem Behandlungsbehälter herausgeschöpfte Behandlungsflüssigkeit zumindest teilweise vom Werkstück zurück in den Behandlungsbehälter gelangen. Dafür ist es von Vorteil, wenn die Rotationseinheit des Fahrwagens während der Translation des Fahrwagens und des sich außerhalb der Behandlungsflüssigkeit befindlichen Werkstücks einmal oder mehrmals zwischen verschiedenen Positionen verstellt wird.

Das Verstellen des Führungsabschnitts kann kontinuierlich oder intervallweise und/oder in Stufen oder stufenlos erfolgen. Die sich daraus ergebende Vielzahl an möglichen Arbeitspositionen ermöglicht es, für verschiedene Werkstücke jeweils eine oder mehrere günstige Positionen festzulegen.

In weiterer Ausgestaltung der Erfindung ist eine Steuerungsvorrichtung vorhanden, die das Verstellen eines Führungselements zwischen den Arbeitspositionen steuert, wobei die Steuerungsvorrichtung das Verstellen des Führungselements in Abhängigkeit von einem Beladungszustand eines Fahrwagens und/oder in Abhängigkeit von einem Werkstücktyp steuert, während mindestens ein geführtes Element mit einem Führungsabschnitt in Eingriff steht.

Die Steuerungsvorrichtung umfasst zum Beispiel mindestens eine Hardware-Komponente und mindestens eine Software-Komponente und ist dazu ausgebildet, einerseits einen Zustandswert der Anlage sowie andererseits eine Position des Führungsabschnitts zu erkennen und/oder zu bestimmen.

Das erste der zwei Führungselemente ist als Führungsabschnitt, insbesondere als Geradführungsabschnitt, als Auslauftrichter und/oder als Einlauftrichter ausgestaltet und ist mit Motorkraft und/oder pneumatisch drehbar, verschwenkbar und/oder verschiebbar angeordnet, um einem geführten Element, d.h. dem zweite Führungselement, einen Impuls und/oder eine Kraft mitgeben zu können.

Die Steuerungsvorrichtung erkennt als Zustandswert der Anlage bevorzugt den Beladungszustand des Fahrwagens. Dies kann mittels eines Sensors geschehen, insbesondere mit Hilfe eines optischen, magnetischen und/oder induktiven Sensors. Der Beladungszustand zeigt an, ob auf dem Fahrwagen ein Werkstück festgelegt ist, oder ob der Fahrwagen in einem Zustand ist, in dem er ein Werkstück aufnehmen kann. Abhängig vom Beladungszustand gibt die Steuerungvorrichtung einer Verstellvorrichtung eines Führungselements vor, das Führungselement von einer Arbeitsposition in eine andere Arbeitsposition zu verstellen.

Alternativ oder zusätzlich ist vorgesehen, dass die Steuerungsvorrichtung mit Hilfe des Sensors erkennt, was für ein Werkstücktyp auf dem Fahrwagen festgelegt ist. Werkstücktypen unterscheiden sich beispielsweise in ihrer Größe, ihrer Form, in der Position von Spalten, Engstellen, Hohlräumen und anderen schwer zugänglichen Bereichen, oder auch in der Position von Ablauföffnungen für Behandlungsflüssigkeit.

Anstelle eines Sensors oder in Ergänzung dazu weisen der Fahrwagen und/oder das Werkstück eine Informationsspeichervorrichtung auf, die mittels berührungsloser Datenübertragung Daten hinsichtlich des Werkstücktyps an die Steuerungsvorrichtung überträgt.

Die Steuerungsvorrichtung kann einem oder mehreren Führungsabschnitten die zum jeweils vorliegenden Werkstücktyp passende Arbeitsposition vorgeben. Das Verstellen eines Führungsabschnitts in eine entsprechende Arbeitsposition, insbesondere in eine Eingriffsposition, führt beispielsweise zu einem Einwirken auf die Rotationseinheit. Dabei hebt der Führungsabschnitt ein geführtes Element vorzugsweise an, das an der Rotationseinheit des Fahrwagens angeordnet ist. Über die Hebelvorrichtung wird das Moment vom geführten Element auf die Rotationseinheit übertragen. Die Rotationseinheit rotiert. Das Rotieren der Rotationseinheit bewirkt eine Verlagerung des darauf angebrachten Werkstücks. Diese Verlagerung begünstigt ein Abtropfen von Flüssigkeit und/oder ein Abschütteln von Luftblasen.

Das Verstellen des Führungsabschnitts kann alternativ jedoch auch dazu führen, dass ein Einwirken auf die Rotationseinheit ausbleibt. Dabei bleibt die Rotationseinheit relativ zur Translationseinheit vorzugsweise in Ruhe.

Die vorliegende Erfindung betrifft des Weiteren eine Anlage zur Oberflächenbehandlung, die ein nach Anspruch 1 umfasst.

In der Anlage ist insbesondere ein Behandlungsbehälter angeordnet. Ein Behandlungsbehälter ist im Allgemeinen vollständig oder teilweise mit einer Behandlungsflüssigkeit gefüllt. Im Behandlungsbehälter wird durch chemische und/oder physikalische Vorgänge eine Oberflächenbehandlung des Werkstücks durchgeführt.

Bei der Behandlungsflüssigkeit kann es sich insbesondere um eine Aktivierlösung, eine Zinkphosphatlösung, eine Zirkoniumlösung, eine Spüllösung oder einen Flüssiglack handeln. Eine Aktivierlösung enthält beispielsweise kolloide Titanphosphate in einer wässrigen Lösung von Dinatriumhydrogenphosphat mit einem pH-Wert im Bereich zwischen etwa 8 und etwa 9.

Alternativ oder zusätzlich können sonstige schichtbildende, reinigende, fettlösende und/oder die Oberfläche des Werkstücks benetzende Flüssigkeiten eingesetzt werden.

Die Behandlungsflüssigkeit tritt in Wechselwirkung mit der Oberfläche des Werkstücks. Die Wechselwirkung der Behandlungsflüssigkeit kann mit Hilfe des verstellbaren Führungselements verbessert werden, indem das Führungselement je nach Arbeitsposition in unterschiedlicher Form auf die Rotationseinheit einwirkt und die Position des Werkstücks verändert.

Vorzugsweise sind mehrere Behandlungsbehälter entlang einer Förderrichtung hintereinander angeordnet. Unterschiedliche Behandlungsbehälter können dabei unterschiedliche Behandlungsflüssigkeiten enthalten.

Alternativ oder zusätzlich kann ein Behandlungsbehälter als Leerdrehtank ausgebildet sein. Ein als Leerdrehtank ausgebildeter Behandlungsbehälter ist vorzugsweise in Förderrichtung nach einem Behandlungsbehälter angebracht, der eine Behandlungsflüssigkeit enthält. Ein Leerdrehtank dient bevorzugt dazu, aus einem Werkstück austretende, überflüssige Behandlungsflüssigkeit aufzunehmen und zu sammeln. Damit lässt sich die Menge an Behandlungsflüssigkeit reduzieren, die nach außerhalb der Anlage zur Oberflächenbehandlung verschleppt wird.

Als Werkstücke oder Werkstücktypen kommen in einer solchen Anlage zur Oberflächenbehandlung vorzugsweise Karosserien und/oder Karosserieteile zum Einsatz. Bei Karosserien handelt es sich insbesondere um Automobil-Karosserien und/oder um Nutzfahrzeug-Karosserien wie solchen von Traktoren und anderen landwirtschaftlichen Fahrzeugen und/oder von Lastkraftwagen. Bei Karosserieteilen handelt es sich bevorzugt um Teile der genannten Karosserien, wie beispielsweise Frontklappen, Heckklappen, Türen und/oder Seitenteile. Karosserien und/oder Karosserieteile weisen vorzugsweise zumindest teilweise metallische und/oder elektrisch leitfähige Werkstoffe auf. Je nach Werkstücktyp nimmt ein verstellbares Führungselement eine der möglichen Arbeitspositionen ein, um die Oberflächenbehandlung des Werkstücks zu unterstützen.

Alternativ oder zusätzlich können Werkstücke eingesetzt werden, die einen hohen Anteil an polymeren Werkstoffen aufweisen, und optional vollständig aus polymeren Werkstoffen bestehen.

Ferner betrifft die vorliegende Erfindung ein Verfahren zum Betreiben eines Fördersystems, vorzugsweise in einer Anlage zur Oberflächenbehandlung.

Der Erfindung liegt diesbezüglich die Aufgabe zugrunde, ein Verfahren bereitzustellen, mittels dessen zu behandelnde Werkstücke flexibel und effizient förderbar sind.

Diese Aufgabe wird erfindungsgemäß gelöst durch ein Verfahren zum Betreiben eines Fördersystems für Werkstücke nach Anspruch 7.

Bei einem solchen Verfahren wird beispielsweise in einem ersten Schritt ein Werkstück auf der Rotationseinheit eines Fahrwagens lösbar festgelegt.

Die Translationseinheit des Fahrwagens wird in einem zweiten Schritt vom Antriebssystem translatorisch entlang der Förderstrecke bewegt. Dabei wird der Fahrwagen zumindest abschnittsweise über einen Behandlungsbehälter hinweg bewegt, der an der Oberseite offen und mit einer Behandlungsflüssigkeit gefüllt ist.

Durch Rotation der Rotationseinheit tauchen das Werkstück und optional der Tragrahmen für ein Werkstück und/oder die Rotationseinheit in die Behandlungsflüssigkeit ein. Vorzugsweise taucht das Werkstück vollständig in die Behandlungsflüssigkeit ein.

Die Translation der Translationseinheit und die Rotation der Rotationseinheit werden von Führungselementen geführt. Ein Führungselement kann von einer Verstellvorrichtung zwischen wenigstens zwei Arbeitspositionen verstellt werden.

Bevorzugt wird der Fahrwagen bewegt, während das Führungselement von der Verstellvorrichtung verstellt wird.

In weiterer Ausgestaltung der Erfindung steuert eine Steuerungsvorrichtung das Verstellen des Führungselements in Abhängigkeit von einem Beladungszustand des Fahrwagens und/oder in Abhängigkeit von einem auf dem Fahrwagen festgelegten Werkstücktyp.

Für jeden Beladungszustand des Fahrwagens und für jedes Werkstück kann individuell festgelegt werden, welche Arbeitsposition das Führungselement einnehmen soll. Die Arbeitsposition des Führungselements wirkt sich auf die Rotation der Rotationseinheit aus.

Je nach eingenommener Arbeitsposition des Führungselements wird die Rotation um einen vorgegebenen Drehwinkel ausgeführt, oder eine Rotation der Rotationseinheit bleibt optional aus.

In weiterer Ausgestaltung der Erfindung weist die Förderstrecke einen Schienenabschnitt auf, entlang dessen der Fahrwagen bewegt wird, und entlang dessen mindestens ein geführtes Element in einen Führungsabschnitt eingreift.

Der Schienenabschnitt erstreckt sich entlang des Behandlungsbehälters und weist eine oder mehrere Stützflächen auf. Eine Stützfläche kann als Auflagefläche ausgebildet sein, die vorzugsweise an der Oberseite des Schienenabschnitts angeordnet ist. Ein Stützelement des Fahrwagens liegt auf der Auflagefläche des Schienenabschnitts auf. Der entlang der Förderstrecke angebrachte Schienenabschnitt unterstützt und/oder führt die Bewegung des Fahrwagens entlang der Förderstrecke. Bevorzugt unterstützt und/oder führt der Schienenabschnitt eine Translationsbewegung des Fahrwagens.

Alternativ oder zusätzlich ist ein Schienenabschnitt vorgesehen, an dem der Fahrwagen hängend befestigt ist. Dieser Schienenabschnitt nimmt im Wesentlichen die Gewichtskraft des Fahrwagens und des optional am Fahrwagen befestigten Werkstücks auf. Ein weiterer, zum ersten Schienenabschnitt beabstandet und näherungsweise parallel angeordneter Schienenabschnitt, der vertikal unterhalb oder oberhalb des ersten Schienenabschnitts angebracht ist, dient vorzugsweise einer seitlichen Führung des Fahrwagens. Alternativ oder zusätzlich dient der weitere Schienenabschnitt auch der Aufnahme eines Teils der Gewichtskraft des Fahrwagens und des Werkstücks.

Während der Fahrwagen entlang der Förderstrecke bewegt wird, greift mindestens ein geführtes Element des Fahrwagens in einen Führungsabschnitt des Antriebssystems ein. Dabei kann vorgesehen sein, dass während der Translation des Fahrwagens entlang der Förderstrecke und entlang des Behandlungsbehälters durchgehend ein einzelnes oder mehrere geführte Elemente des Fahrwagens in einen oder mehrere Führungsabschnitte eingreifen.

Alternativ oder zusätzlich gelangt ein geführtes Element mit einem Führungsabschnitt in Eingriff, während ein anderes geführtes Element gleichzeitig oder danach vom selben oder einem anderen Führungsabschnitt freigegeben wird.

Bevorzugt gibt der Führungsabschnitt das geführte Element frei, indem der Fahrwagen weiterbewegt wird. Besonders bevorzugt gibt der Führungsabschnitt das geführte Element an einem Ende des Führungsabschnitts frei. Die Freigabe kann insbesondere dadurch erfolgen, dass der Fahrwagen translatorisch entlang der Förderstrecke bewegt wird, und zwar über eine Erstreckung des Führungsabschnitts in Förderrichtung hinaus.

In weiterer Ausgestaltung der Erfindung wird ein Führungsabschnitt zwischen zwei Arbeitspositionen verstellt, wobei die erste Arbeitsposition eine Eingriffsposition ist, in der das geführte Element mit dem Führungsabschnitt in Eingriff gelangt, wenn der Führungsabschnitt die Eingriffsposition einnimmt während der Fahrwagen eine bestimmte Position entlang der Förderstrecke einnimmt, und die zweite Arbeitsposition eine Nichteingriffsposition ist, in der das geführte Element mit dem Führungsabschnitt optional nicht in Eingriff gelangt während der Fahrwagen dieselbe bestimmte Position entlang der Förderstrecke einnimmt, und das geführte Element passiert den Führungsabschnitt, während der Führungsabschnitt die Nichteingriffsposition einnimmt.

Ein Führungsabschnitt, der sich in der Eingriffsposition befindet und in Eingriff steht mit einem geführten Element, wirkt über Kraft- und/oder Momentenübertragung auf das geführte Element ein. Je nach Ausgestaltung des Führungsabschnitts erfolgt eine Kraftübertragung auf das geführte Element, die eine Translation des Fahrwagens bewirkt, an dem das geführte Element festgelegt ist, und/oder eine Kraft-/Momentenübertragung, die eine Translation des Fahrwagens und eine Rotation der Rotationseinheit des Fahrwagens bewirkt.

Ein Führungsabschnitt, der sich in der Nichteingriffsposition befindet, steht vorzugsweise mit keinem geführten Element in Eingriff, solange der Führungsabschnitt sich in der Nichteingriffsposition befindet. Vorzugsweise kann der Führungsabschnitt aber durch Verstellen von der Nichteingriffsposition in die Eingriffsposition gebracht werden, in der der Führungsabschnitt mit einem geführten Element zumindest zeitweise in Eingriff gebracht werden kann. Das Verstellen des Führungsabschnitts zwischen den Arbeitspositionen erfolgt in diesem Fall während der Führungsabschnitt zumindest vorübergehend mit keinem geführten Element in Eingriff steht. Der Fahrwagen befindet sich dabei beispielsweise in einer Position entlang der Förderstrecke, die in Förderrichtung betrachtet vor oder hinter dem betreffenden Führungsabschnitt liegt, während dieser betreffende Führungsabschnitt von der Verstellvorrichtung verstellt wird. Die Arbeitsposition des Führungsabschnitts legt fest, ob ein Eingriff zwischen dem Führungsabschnitt und dem geführten Element zustande kommt oder nicht. Ein Einwirken des Führungsabschnitts auf das geführte Element kann damit optional ausbleiben und das geführte Element kann den Führungsabschnitt passieren, ohne mit diesem in Eingriff zu gelangen.

In weiterer Ausgestaltung der Erfindung wird ein Führungsabschnitt verstellt, während ein geführtes Element mit diesem Führungsabschnitt in Eingriff steht.

Das Verstellen des Führungsabschnitts, während das geführte Element mit dem Führungsabschnitt in Eingriff steht, bewirkt durch Zwangsführung des geführten Elements im Führungsabschnitt eine zusätzliche Kraft- und/oder Momentenübertragung vom Führungsabschnitt auf das geführte Element, wenn nicht nur die Bewegung des Fahrwagens, sondern zugleich eine Verstellung des Führungsabschnitts die Einleitung eines Impulses auf das geführte Element bewirkt.

Der Führungsabschnitt ist vorzugsweise verschiebbar gelagert. Das Verstellen des Führungsabschnitts erfolgt dann im Wesentlichen auf einer linearen oder gekrümmten Bahn und/oder in vertikaler Richtung.

Alternativ oder zusätzlich ist es denkbar, den Führungsabschnitt drehbar zu lagern. Das Verstellen des Führungsabschnitts erfolgt dann durch Drehen oder Verschwenken.

Besonders bevorzugt sind weitere Eingriffspositionen als zusätzliche Arbeitspositionen vorgesehen. Das Verstellen des Führungsabschnitts zwischen verschiedenen Eingriffspositionen erfolgt vorzugsweise, während der Führungsabschnitt mit dem geführten Element in Eingriff steht. Das Verstellen des Führungsabschnitts wirkt sich mittels Kraftübertragung unmittelbar auf den Fahrwagen, insbesondere auf die Rotationseinheit des Fahrwagens, aus.

In weiterer Ausgestaltung der Erfindung resultiert ein Verstellen des Führungsabschnitts in einer Drehung der Rotationseinheit des Fahrwagens um eine Rotationsachse.

Das Verstellen des Führungsabschnitts bei gleichzeitigem Eingriff eines geführten Elements des Fahrwagens in den Führungsabschnitt bewirkt eine zusätzliche Kraft- und/oder Momentenübertragung auf dieses geführte Element. Die zusätzliche Kraft- und/oder Momentenübertragung steuert eine Rotation der Rotationseinheit des Fahrwagens. Die Rotation kann ein Werkstück beispielsweise in eine Position bringen, in der eine besonders vorteilhafte Behandlung möglich ist. Insbesondere in Bezug auf das Benetzungs- und/oder Abtropfverhalten während der Behandlung kann es vorteilhaft sein, den Führungsabschnitt zu verstellen, während ein geführtes Element mit diesem Führungsabschnitt in Eingriff steht. Eine Behandlungsflüssigkeit kann dadurch besonders schnell die Oberfläche des Werkstücks benetzen, insbesondere auch in solchen Bereichen des Werkstücks, in denen Lufteinschlüsse eine Benetzung erschweren.

Alternativ oder zusätzlich kann das Verstellen des Führungsabschnitts bewirken, dass die Behandlungsflüssigkeit besonders schnell aus dem Werkstück ablaufen kann, insbesondere aus solchen Bereichen des Werkstücks, die die Behandlungsflüssigkeit speichern, schöpfen und/oder verschleppen.

Die Rotationsachse der Rotationseinheit liegt zum Beispiel innerhalb der Kontur des Fahrwagens, des Werkstücks oder der Einheit aus Fahrwagen und Werkstück. Alternativ oder zusätzlich durchstößt die Rotationsachse den Massenmittelpunkt oder den Volumenmittelpunkt des Fahrwagens, des Werkstücks und/oder der Einheit aus Fahrwagen und Werkstück. Bei der Rotation der Rotationseinheit kann ein Werkstück, das auf dem Fahrwagen festgelegt ist, gedreht und/oder verschwenkt werden.

In einer modifizierten Variante des Fördersystems wird die Rotationseinheit um eine außerhalb ihrer Kontur und/oder eine von ihrem Massenmittelpunkt beabstandet angeordnete Schwenkachse verschwenkt.

In einer weiteren modifizierten Variante des Fördersystems weist ein Fahrwagen alternativ oder zusätzlich zu einem verstellbaren Führungselement ein Kupplungselement auf, mit dessen Hilfe zwei Segmente des Fahrwagens, insbesondere eine Rotationseinheit und eine Translationseinheit, kraftschlüssig gekoppelt werden können. Es kann vorgesehen sein, dass das Kupplungselement die Verbindung zeit- und/oder abschnittsweise löst.

Das Kupplungselement kann optional auch die Wirkung einer Bremse erfüllen. Dadurch wird eine Rotation des Fahrwagens kontrolliert.

In den Zeichnungen zeigen:
- Fig. 1: in einer schematischen Darstellung einen Längsschnitt durch ein erstes Ausführungsbeispiel einer Anlage zur Oberflächenbehandlung;
- Fig. 2a: in einer schematischen Darstellung einen Querschnitt an der Stelle Y von Fig. 1 und von Fig. 3 durch das erste Ausführungsbeispiel einer Anlage zur Oberflächenbehandlung;
- Fig. 2b: in einer schematischen Darstellung einen Ausschnitt aus Fig. 2a;
- Fig. 2c: in einer schematischen Darstellung einen Querschnitt durch drei Ausgestaltungen i), ii) und iii) von Führungsabschnitten
- Fig. 3: in einer schematischen Darstellung eine ausschnittsweise Seitenansicht der in Fig. 1 bis 2c abgebildeten Anlage zur Oberflächenbehandlung, eines Fahrwagens der Anlage zur Oberflächenbehandlung und eines auf dem Fahrwagen festgelegten Werkstücks;
- Fig. 4: in einer schematischen Darstellung a) eine Seitenansicht und b) eine Draufsicht auf einen Fahrwagen gemäß Fig. 3;
- Fig. 5a: in einer schematischen Darstellung eine ausschnittsweise Seitenansicht eines zweiten Ausführungsbeispiels einer Anlage zur Oberflächenbehandlung mit verstellbaren Führungsabschnitten in verschiedenen Arbeitspositionen;
- Fig. 5b: in einer schematischen Darstellung einen Querschnitt an der Stelle I von Fig. 5a mit einem verstellbaren Führungsabschnitt in einer ersten Arbeitsposition;
- Fig. 5c: in einer schematischen Darstellung einen Querschnitt an der Stelle II von Fig. 5a mit einem weiteren verstellbaren Führungsabschnitt in einer zweiten Arbeitsposition;
- Fig. 6a: in einer schematischen Darstellung eine ausschnittsweise Seitenansicht des zweiten Ausführungsbeispiels einer Anlage zur Oberflächenbehandlung gemäß Fig. 5a mit verstellbaren Führungsabschnitten in verschiedenen Arbeitspositionen;
- Fig. 6b: in einer schematischen Darstellung einen Querschnitt an der Stelle III von Fig. 6a mit einem verstellbaren Führungsabschnitt in einer zweiten Arbeitsposition;
- Fig. 6c: in einer schematischen Darstellung einen Querschnitt an der Stelle IV von Fig. 6a mit einem weiteren verstellbaren Führungsabschnitt in einer ersten Arbeitsposition;
- Fig. 7: in einer schematischen Darstellung eine ausschnittsweise Seitenansicht des zweiten Ausführungsbeispiels mit einer Verstellvorrichtung für einen Führungsabschnitt;
- Fig. 8: in einer schematischen Darstellung eine ausschnittsweise Seitenansicht eines dritten Ausführungsbeispiels einer Anlage zur Oberflächenbehandlung mit einem verstellbaren Führungsabschnitt in einer ersten Arbeitsposition;
- Fig. 9: in einer schematischen Darstellung eine ausschnittsweise Seitenansicht des dritten Ausführungsbeispiels einer Anlage zur Oberflächenbehandlung mit dem verstellbaren Führungsabschnitt in einer zweiten Arbeitsposition;
- Fig. 10: in einer schematischen Darstellung einen ausschnittsweisen Querschnitt an den Stellen V und VI der Fig. 8 und 9 mit der in Fig. 8 dargestellten ersten Arbeitsposition 15a‴ des Führungsabschnitts und mit der in Fig. 9 dargestellten zweiten Arbeitsposition 15b‴ des Führungsabschnitts.

Gleiche oder funktional äquivalente Elemente sind in sämtlichen Figuren mit denselben Bezugszeichen versehen.

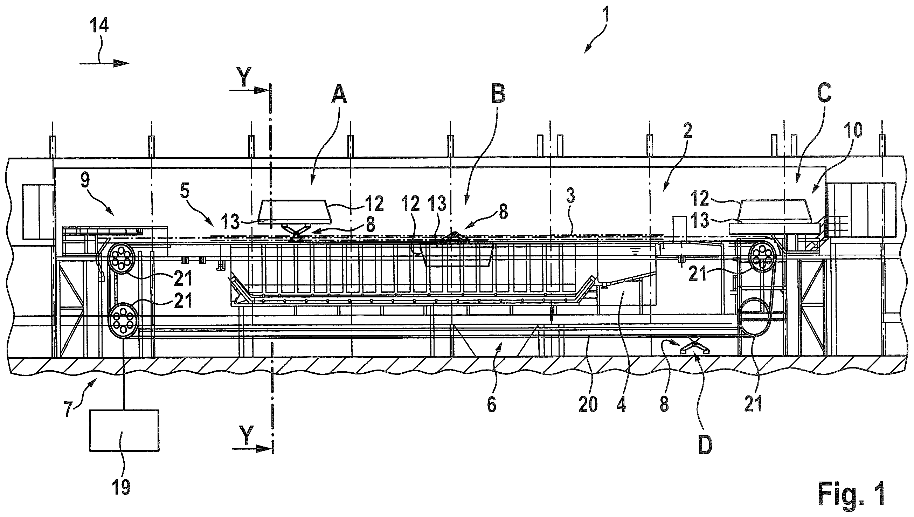

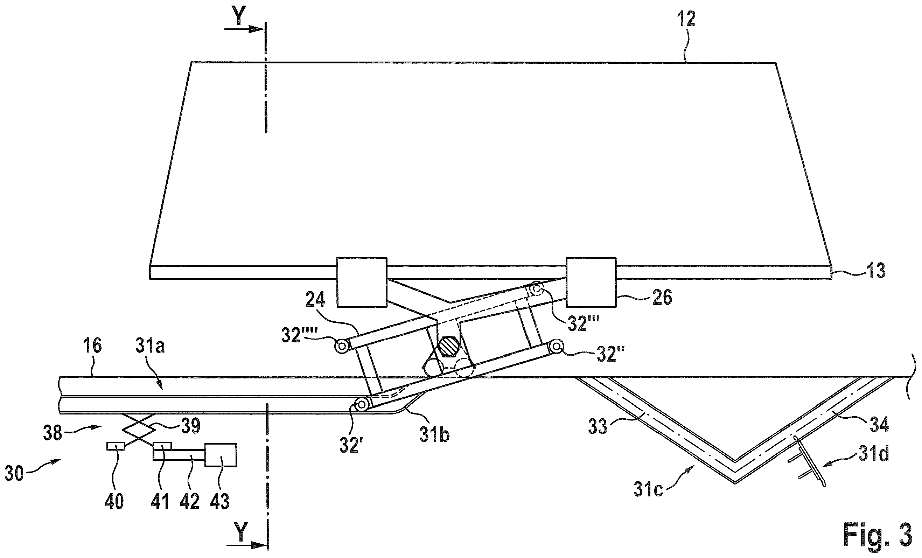

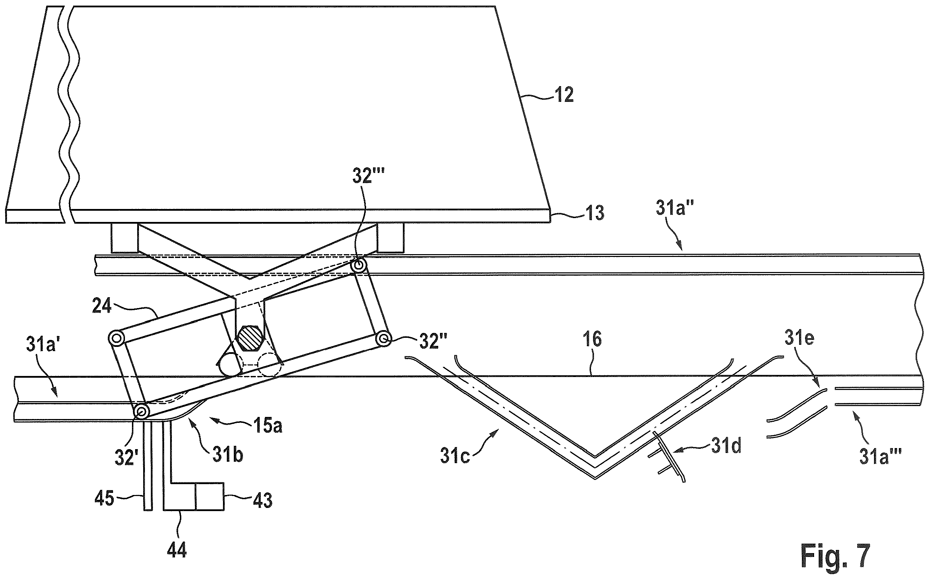

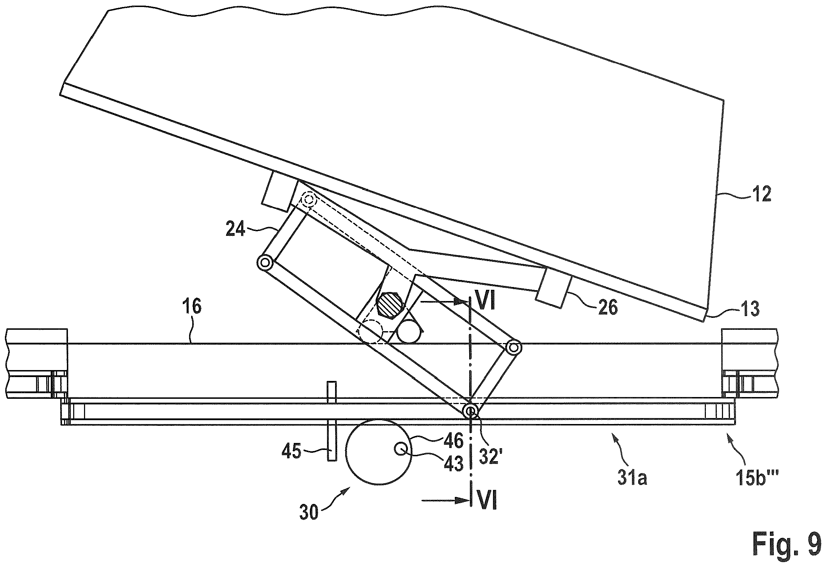

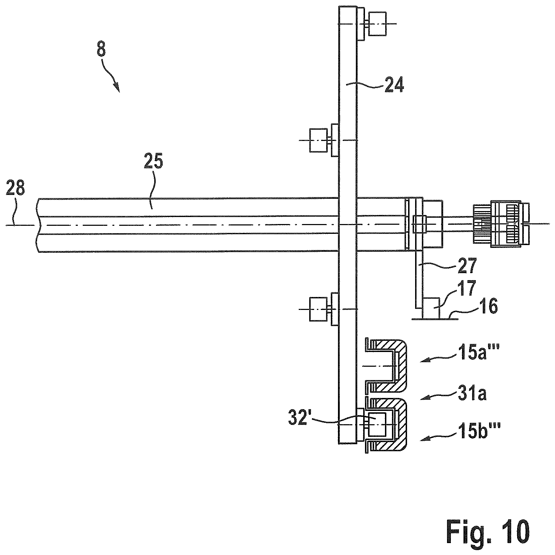

In den Figuren 1 bis 10 dargestellte verschiedene Anlagen 1 zur Oberflächenbehandlung dienen der Behandlung von Werkstücken 12. Die Anlagen 1 zur Oberflächenbehandlung sind insbesondere als Anlagen zur Tauchlackierung oder Tauchbeschichtung von Automobilkarossen ausgebildet.

In nicht dargestellten modifizierten Ausführungsbeispielen ist eine Anlage 1 zur Oberflächenbehandlung wahlweise als Anlage zur Vorbehandlung, zur Tauchbeschichtung und/oder zur Reinigung von Werkstücken ausgestaltet. Bei einem Werkstück kann es sich beispielsweise um eine Automobilkarosserie, eine Karosserie eines Nutzfahrzeugs oder dergleichen und/oder um Teile davon handeln.

In weiteren nicht dargestellten modifizierten Ausführungsbeispielen können eine Anlage zur Reinigung von Werkstücken, eine Anlage zur Vorbehandlung von Werkstücken und/oder eine Anlage zur Tauchlackierung von Werkstücken in Förderrichtung hintereinander angeordnet sein, sodass ein Werkstück verschiedene Anlagen nacheinander durchläuft.

Ein in den Fig. 1 bis 4b dargestelltes erstes Ausführungsbeispiel einer Anlage 1 zur Oberflächenbehandlung weist ein Fördersystem 2 und einen Behandlungsbehälter 3 auf.

Der Behandlungsbehälter 3 ist mit einer Behandlungsflüssigkeit 4, insbesondere in Form eines Lackes, gefüllt.

Das Fördersystem 2 weist eine Förderstrecke 5, eine Rückführstrecke 6, ein Antriebssystem 7, einen Fahrwagen 8, einen ersten Bereich 9 für die Werkstückübergabe und einen zweiten Bereich 10 für die Werkstückübergabe sowie eine Führungseinheit 11 auf.

Die Förderstrecke 5 umfasst ein Schienensystem zum Transport von Fahrwagen 8 durch eine Anlage 1. Die Förderstrecke 5 weist außerdem einen Schienenabschnitt 16 auf, auf dem der Fahrwagen 8 mit einem Stützelement 17 aufliegt und, vorzugsweise in Förderrichtung 14, entlang des Behandlungsbehälters 3 rollt. Das Stützelement 17 ist als Rolle ausgebildet.

In einem modifizierten Ausführungsbeispiel ist auf beiden Seiten einer als vertikale Mittelebene 18 ausgebildeten Hilfsebene der Anlage 1 zur Oberflächenbehandlung jeweils ein solcher Schienenabschnitt vorgesehen.

Die Rückführstrecke 6 verläuft im vorliegenden Ausführungsbeispiel zumindest teilweise unter dem Behandlungsbehälter 3 und dient dem Zweck, den Fahrwagen 8 vom zweiten Bereich 10 für die Werkstückübergabe zurück in den ersten Bereich 9 für die Werkstückübergabe zu fördern.

In einem weiteren modifizierten Ausführungsbeispiel verläuft die Rückführstrecke seitlich neben dem Behandlungsbehälter.

Das Antriebssystem 7 weist eine Antriebseinheit 19 in Form eines Motors und eine Vorrichtung 20 zur Kraftübertragung in Form einer Kette auf. Die Kette ist in einer geschlossenen Schleife um vier Umlenkrollen 21 geführt. Der Motor versetzt die Kette in eine Drehbewegung um die Umlenkrollen 21, wodurch der an der Kette festgelegte Fahrwagen 8 entlang der Förderstrecke 5 und entlang der Rückführstrecke 6 bewegt wird.

In einem weiteren modifizierten Ausführungsbeispiel ist auf beiden Seiten der vertikalen Mittelebene 18 der Anlage 1 zur Oberflächenbehandlung jeweils eine Kette vorgesehen, die jeweils um vier Umlenkrollen geführt sind. Die beiden Ketten werden von einem Motor angetrieben.

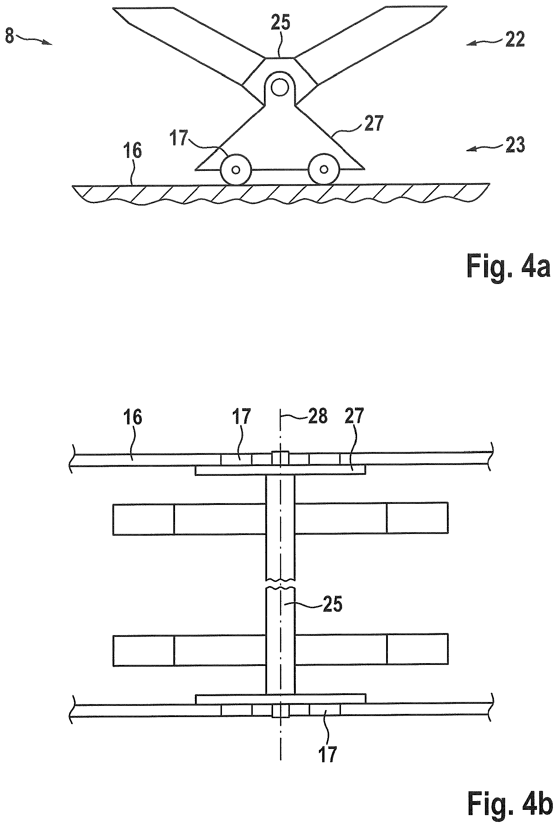

Der Fahrwagen 8 ist als schienengebundenes Fahrzeug ausgestaltet, auf dem Nutzlasten festgelegt werden können. Wie insbesondere Fig. 4α und 4b zu entnehmen ist, ist der Fahrwagen 8 zweiteilig ausgebildet, wobei ein erster Teil als Rotationseinheit 22 und ein zweiter Teil als Translationseinheit 23 ausgestaltet ist. Die Rotationseinheit 22 ist drehbar an der Translationseinheit 23 fixiert. Die Rotationseinheit 22 weist eine Hebelvorrichtung 24, eine Welle 25 und eine Vorrichtung 26 zur Aufnahme eines Werkstücks auf. An der Vorrichtung 26 zur Aufnahme eines Werkstücks kann ein Werkstück 12 und/oder ein Tragrahmen 13 für ein Werkstück festgelegt werden.

Die Translationseinheit 23 umfasst ein Stützelement 17 in Form einer Rolle und ein Verbindungselement 27. Das Verbindungselement 27 verbindet die Rolle, die Welle 25 sowie die Kette des Antriebssystems 7 miteinander. Die Translationseinheit 23 rollt auf einer oder mehreren Schienen entlang der Förderstrecke 5. Die Welle 25 der Rotationseinheit 22 ist drehbar an der Translationseinheit 23 gelagert. Durch eine zentrale Längsachse dieser Welle 25 verläuft eine Rotationsachse 28 der Rotationseinheit 22.

Im ersten Bereich 9 für die Werkstückübergabe werden ein Werkstück 12 und optional ein Tragrahmen 13 für ein Werkstück lösbar auf dem Fahrwagen 8 befestigt und anschließend vom Antriebssystem 7 in Förderrichtung 14 entlang der Förderstrecke 5 bewegt (Position A in Fig. 1).

Im zweiten Bereich 10 für die Werkstückübergabe werden das Werkstück 12 und der Tragrahmen 13 für ein Werkstück vom Fahrwagen 8 gelöst (Position C in Fig. 1) und an eine nicht dargestellte Fördereinheit übergeben. Diese nicht dargestellte Fördereinheit transportiert das Werkstück 12 beispielsweise in eine ebenfalls nicht dargestellte Anlage zur Trocknung und/oder Härtung des an der Oberfläche des Werkstücks 12 abgeschiedenen Lacks.

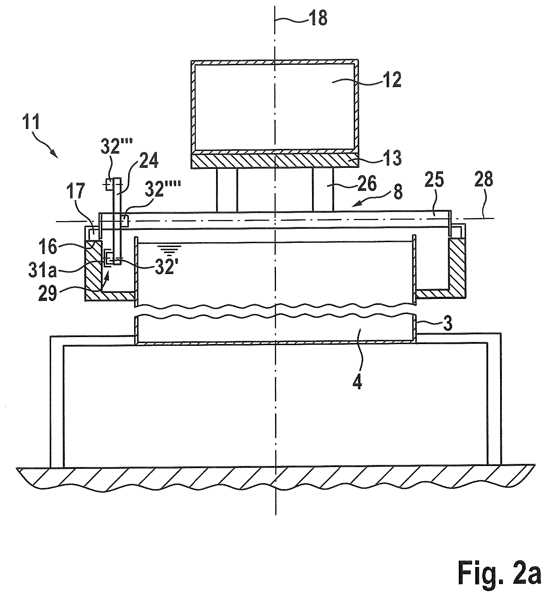

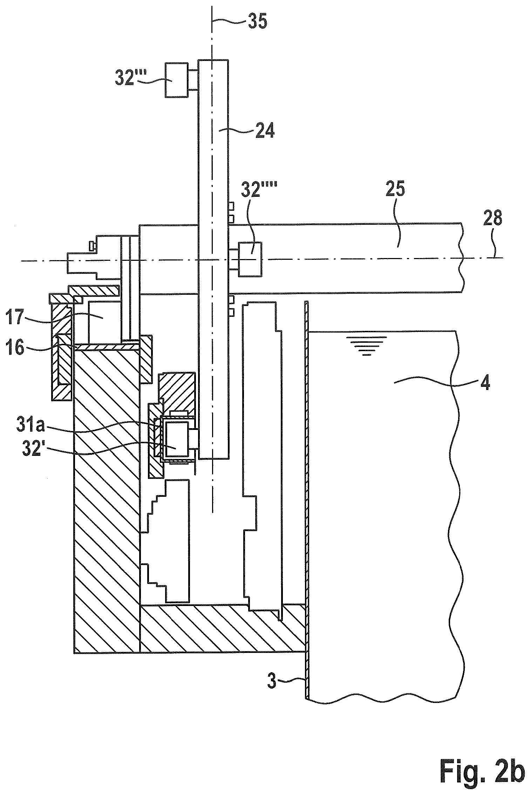

Die in Fig. 2a dargestellte Führungseinheit 11 umfasst einen stationären Teil und einen mobilen Teil, die zusammenwirken, und weist mehrere Führungselemente 29 auf. Die Führungselemente 29 der Förderstrecke 5 sind dem stationären Teil der Führungseinheit 11 zugeordnet und als Führungsabschnitte 31a, 31b, 31c und 31d in erster, zweiter, dritter bzw. vierter Ausgestaltung (erste, zweite, dritte und vierte Ausgestaltung des Führungsabschnitts 31) ausgebildet. Die Führungselemente 29 der Hebelvorrichtung 24 sind dem mobilen Teil der Führungseinheit zugeordnet und als erstes, zweites und drittes geführtes Element 32', 32" bzw. 32‴ ausgebildet.

Der Führungseinheit 11 ist eine Hilfsebene zugeordnet, die als Ebene 35 einer Hebelvorrichtung ausgebildet ist. Die Ebene 35 einer Hebelvorrichtung ist senkrecht zur Rotationsachse 28 angeordnet und schneidet die Hebelvorrichtung 24. In diesem Ausführungsbeispiel sind ein erstes und ein drittes geführtes Element 32' und 32‴ auf einer ersten, in Förderrichtung linken Seite dieser Ebene 35 einer Hebelvorrichtung an der Hebelvorrichtung 24 angeordnet. Ein zweites geführtes Element 32" ist auf der zweiten, in Förderrichtung rechten Seite dieser Ebene 35 einer Hebelvorrichtung an der Hebelvorrichtung 24 angeordnet.

In einem weiteren modifizierten Ausführungsbeispiel sind weitere geführte Elemente an der Hebelvorrichtung 24 vorgesehen. Eine Hebelvorrichtung 24 eines solchen modifizierten Ausführungsbeispiels weist zwei geführte Elemente auf jeder Seite der Ebene 35 einer Hebelvorrichtung auf. Alternativ ist es möglich, geführte Elemente nur auf einer Seite der Ebene 35 einer Hebelvorrichtung vorzusehen.

Mit Hilfe der Führungseinheit 11 wird eine Kraft und/oder ein Moment vom Antriebssystem 7 auf die Hebelvorrichtung 24 der Rotationseinheit 22 übertragen. Je nach Ausgestaltung der Führungselemente 29 wird die Rotationseinheit 22 ausgelenkt und in Rotation versetzt oder nicht. Wird die Rotationseinheit 22 ausgelenkt und in Rotation versetzt, werden der an der Rotationseinheit 22 festgelegte Tragrahmen 13 für ein Werkstück und das daran festgelegte Werkstück 12 mitbewegt. Die Bewegungslinie des Werkstücks 12 schneidet den Raum der Behandlungsflüssigkeit 4. Das Werkstück 12 taucht in den Behandlungsbehälter 3 und in die im Behandlungsbehälter 3 angeordnete Behandlungsflüssigkeit 4 ein (Position B in Fig. 1).

Anschließend wird das Werkstück 12 mit Hilfe der Führungseinheit 11 unter Fortsetzung der Rotation aus der Behandlungsflüssigkeit 4 gehoben. Das Fortsetzen der Rotation erfolgt wahlweise unter Beibehalten oder unter Umkehren der Drehrichtung der Rotation.

Nach dem Lösen des Werkstücks 12 und des Tragrahmens 13 für ein Werkstück wird der Fahrwagen 8 vom Antriebssystem 7 entgegen der Förderrichtung 14 entlang der Rückführstrecke 6 bewegt (Position D in Fig. 1).

Ist der Fahrwagen 8 wieder im ersten Bereich 9 für die Werkstückübergabe angelangt, können am Fahrwagen 8 erneut ein zu lackierendes Werkstück 12 und optional ein Tragrahmen 13 für ein Werkstück lösbar befestigt werden.

In einem weiteren modifizierten Ausführungsbeispiel umfasst die Anlage 1 zur Oberflächenbehandlung mehrere Fahrwagen 8, die, vorzugsweise mit gleichbleibendem Abstand zueinander, hintereinander angeordnet sind. An einen Fahrwagen 8 können optional ein Werkstück 12 und/oder ein Tragrahmen 13 für ein Werkstück befestigt werden.

In einem weiteren modifizierten Ausführungsbeispiel umfasst ein Antriebssystem Einzelantriebe für jeden Fahrwagen. Hierfür weist jeder Fahrwagen beispielsweise einen eigenen Elektromotor auf, mit dem ein Fahrwagen hinsichtlich Position und/oder Geschwindigkeit unabhängig von anderen Fahrwagen translatorisch entlang der Förderstrecke bewegt werden kann.

In einem weiteren modifizierten Ausführungsbeispiel sind die Fahrwagen 8 und das Antriebssystem 7 lösbar miteinander verbunden. Das Antriebssystem 7 weist eine Vorrichtung 20 zur Kraftübertragung beispielsweise in Form einer Kette auf. Die Fahrwagen 8 weisen eine Verbindungsvorrichtung, zum Beispiel in Form eines Hakens oder Mitnehmers, auf. Mit der Verbindungsvorrichtung kann eine lösbare Verbindung zwischen einem Fahrwagen 8 und der Vorrichtung 20 zur Kraftübertragung hergestellt werden, indem die Verbindungsvorrichtung mit der Vorrichtung 20 zur Kraftübertragung, oder mit einer an der Vorrichtung 20 zur Kraftübertragung vorgesehenen Verbindungseinheit in Eingriff gebracht wird. Insbesondere ist es möglich, die Vorrichtung 20 zur Kraftübertragung mit Hilfe einer Antriebseinheit 19, beispielsweise in Form eines Motors, zu bewegen. Die Fahrwagen 8 können durch die lösbare Verbindung zeitweise mit der Vorrichtung 20 zur Kraftübertragung in kraftschlüssiger Verbindung stehen, und damit zeitweise vom Antriebssystem 7 bewegt werden.

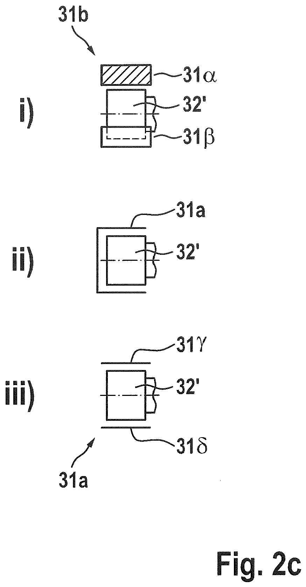

In Fig. 2c sind in einer schematischen Darstellung Querschnitte i, ii, iii durch verschiedene Ausgestaltungen von Führungsabschnitten aufgeführt.

Fig. 2c) i) zeigt einen Querschnitt durch einen Führungsabschnitt 31b zweiter Ausgestaltung, der eine vertikale Auslenkung eines ersten geführten Elements 32' bewirkt, das zweiseitig zwangsgeführt ist. Der Führungsabschnitt 31b zweiter Ausgestaltung weist einen oberen Teil 31α und einen unteren Teil 31β auf, die abschnittsweise parallel zueinander angeordnet sind. Das erste geführte Element 32' passiert den Führungsabschnitt 31b zweiter Ausgestaltung und wird dabei vom oberen Teil 31α und vom unteren Teil 31β geführt. An einem Ende des Führungsabschnitts 31b zweiter Ausgestaltung, an dem das erste geführte Element 32' vom Führungsabschnitt 31b zweiter Ausgestaltung freigegeben wird, liegt eine Querschnittserweiterung vor. Der Abstand zwischen dem oberen Teil 31α und dem unteren Teil 31β wird in der Richtung größer, in der das erste geführte Element 32' den Führungsabschnitt 31b zweiter Ausgestaltung passiert. Das erste geführte Element 32' wird nach Eintritt in den Führungsabschnitt 31b zweiter Ausgestaltung zunächst weitgehend parallel zur Förderstrecke 5 bewegt.

Des Weiteren sind die beiden Teile 31α und 31β des Führungsabschnitts 31b zweiter Ausgestaltung abschnittsweise gekrümmt ausgebildet. Das erste geführte Element 32' folgt beim Passieren des Führungsabschnitts 31b zweiter Ausgestaltung dieser Krümmung und wird dabei von einer weitgehend parallel zur Förderstrecke 5 ausgerichteten Bahn in eine gegenüber der Förderstrecke 5 geneigte Bahn umgelenkt. Die vertikale Bewegung des ersten geführten Elements 32' ist dabei weitgehend darauf beschränkt, der Krümmung des Führungsabschnitts 31b zweiter Ausgestaltung zu folgen. Während das erste geführte Element 32' der Krümmung des Führungsabschnitts 31b zweiter Ausgestaltung folgt, übernimmt aufgrund der Richtung der Kraftvektoren hauptsächlich der untere Teil 31β des Führungsabschnitts 31b zweiter Ausgestaltung die Zwangsführung des ersten geführten Elements 32'.

Fig. 2c) ii) zeigt einen Querschnitt durch eine erste Variante eines Führungsabschnitts 31a erster Ausgestaltung mit einer dreiseitigen Zwangsführung eines ersten geführten Elements 32'. Der Führungsabschnitt 31a erster Ausgestaltung weist einen U-förmigen Querschnitt auf und erstreckt sich im Wesentlichen parallel zur Förderstrecke 5. Hierfür sind drei rechteckige Flächensegmente an ihren Längsseiten derart aneinander angefügt, dass im Querschnitt der aneinandergefügten Flächensegmente ein U gebildet ist. Ein Flächensegment weist vorzugsweise eine im Verhältnis zur Breite und Dicke sehr große Länge auf. Ein Flächensegment umfasst besonders bevorzugt ein Schienensegment. Ein U-förmiger Führungsabschnitt 31a erster Ausgestaltung umfasst dann drei Schienensegmente. Zwischen dem Eintritt des ersten geführten Elements 32' in den Führungsabschnitt 31a erster Ausgestaltung und dem Austritt des ersten geführten Elements 32' aus dem Führungsabschnitt 31a erster Ausgestaltung wird das erste geführte Element 32' von den drei Schienensegmenten des U-förmigen Führungsabschnitts 31a erster Ausgestaltung zwangsgeführt. Die Verteilung der vom Führungsabschnitt 31a erster Ausgestaltung aufzunehmenden Kräfte auf die drei Schienensegmente kann variieren, während das erste geführte Element 32' den Führungsabschnitt 31a erster Ausgestaltung passiert.

Fig. 2c) iii) zeigt einen Querschnitt durch eine zweite Variante eines Führungsabschnitts 31a erster Ausgestaltung, der eine lineare, zweiseitige Zwangsführung eines ersten geführten Elements 32' bewirkt. Diese Variante eines Führungsabschnitts 31a erster Ausgestaltung weist einen oberen Teil 31γ und einen unteren Teil 31δ auf. Der obere Teil 31γ und der untere Teil 31δ sind im Wesentlichen parallel zueinander und im Wesentlichen parallel zur Förderstrecke 5 angeordnet. Der obere Teil 31γ und der untere Teil 31δ des Führungsabschnitts 31a erster Ausgestaltung übernehmen jeweils einen variierenden Anteil der Kräfte, die bei der Zwangsführung des ersten geführten Elements 32' zwischen dem Führungsabschnitt 31a erster Ausgestaltung und dem ersten geführten Element 32' übertragen werden. Das erste geführte Element 32' tritt in diesen Führungsabschnitt 31a erster Ausgestaltung ein, wird weitgehend parallel zur Förderstrecke 5 zwangsgeführt und tritt aus dem Führungsabschnitt 31a erster Ausgestaltung wieder aus.

Entlang der Förderstrecke 5 sind auf einer Seite der vertikalen Mittelebene 18 vier Führungsabschnitte angebracht. Ein Führungsabschnitt 31a erster Ausgestaltung, ein Führungsabschnitt 31b zweiter Ausgestaltung, ein Führungsabschnitt 31c dritter Ausgestaltung sowie ein Führungsabschnitt 31d vierter Ausgestaltung.

In einem weiteren modifizierten Ausführungsbeispiel sind Führungsabschnitte auf beiden Seiten der vertikalen Mittelebene 18 angebracht.

Der Führungsabschnitt 31a erster Ausgestaltung ist im vorliegenden Ausführungsbeispiel als Geradführungsabschnitt ausgebildet. Er umfasst mehrere Schienensegmente und weist einen U-förmigen Querschnitt auf. Der Führungsabschnitt 31a erster Ausgestaltung erstreckt sich parallel zur Förderstrecke 5 und führt ein erstes geführtes Element 32', das mit dem Führungsabschnitt 31a erster Ausgestaltung in Eingriff steht, entlang der und parallel zur Förderstrecke 5.

Der Führungsabschnitt 31b zweiter Ausgestaltung ist im vorliegenden Ausführungsbeispiel als Auslauf-Trichter ausgebildet und umfasst einen oberen Teil 31α sowie einen unteren Teil 31β, die abschnittsweise parallel zueinander angeordnet sind. Beide Teil 31α und 31β sind abschnittsweise gekrümmt ausgebildet. Ein den Führungsabschnitt 31b zweiter Ausgestaltung passierendes erstes geführtes Element 32' folgt dieser Krümmung per Zwangsführung und wird dabei angehoben. An dem Ende des Führungsabschnitts 31b zweiter Ausgestaltung, an dem das erste geführte Element 32' vom Führungsabschnitt 31b zweiter Ausgestaltung freigegeben wird, liegt eine Querschnittserweiterung vor. Der Abstand zwischen dem oberen Teil 31α und dem unteren Teil 31β des Führungsabschnitts 31b zweiter Ausgestaltung wird in der Richtung größer, in der das erste geführte Element 32' den Führungsabschnitt 31b zweiter Ausgestaltung passiert.

Der Führungsabschnitt 31c dritter Ausgestaltung ist im vorliegenden Ausführungsbeispiel als V-Führungsabschnitt ausgebildet. Er ist in der Seitenansicht V-förmig ausgestaltet und umfasst ein erstes Segment 33 und ein zweites Segment 34, die winklig zueinander aneinandergefügt sind. Die beiden Segmente 33 und 34 weisen jeweils einen U-förmigen Querschnitt auf. Aufgrund der V-Form wird ein zweites geführtes Element 32", das vom Führungsabschnitt 31c dritter Ausgestaltung geführt wird, zunächst abwärts in Richtung des Bodens bewegt, während es das erste Segment 33 des Führungsabschnitts 31c dritter Ausgestaltung passiert. Anschließend wird das zweite geführte Element 32" aufwärts vom Boden weg bewegt, während es das zweite Segment 34 des Führungsabschnitts 31c dritter Ausgestaltung passiert.

Der Führungsabschnitt 31d vierter Ausgestaltung ist im vorliegenden Ausführungsbeispiel als Zwischenführungsabschnitt ausgebildet und weist ein weitgehend gerades Schienensegment auf. Ein mit diesem Führungsabschnitt 31d vierter Ausgestaltung in Eingriff stehendes drittes geführtes Element 32‴ wird einseitig zwangsgeführt und dabei abwärts in Richtung des Bodens bewegt.

Das erste, das zweite und das dritte geführte Element 32', 32" bzw. 32'", deren Zusammenwirken jeweils mit bestimmten Führungsabschnitten hier beschrieben ist, können in einem modifizierten Ausführungsbeispiel jeweils auch mit einem Führungsabschnitt anderer Ausgestaltung in Eingriff gebracht werden.

Wird der Fahrwagen 8 entlang der Förderstrecke 5 bewegt, steht das erste geführte Element 32' zunächst mit einem Führungsabschnitt 31a erster Ausgestaltung in Eingriff. Die Rotationseinheit 22 und die Translationseinheit 23 des Fahrwagens 8 werden entlang der Förderstrecke 5 bewegt, wobei sich die Position der Rotationseinheit 22 relativ zur Translationseinheit 23 optional nicht ändert.

In Förderrichtung 14 folgt auf den Führungsabschnitt 31a erster Ausgestaltung ein Führungsabschnitt 31b zweiter Ausgestaltung. Das erste geführte Element 32' gelangt mit dem Führungsabschnitt 31b zweiter Ausgestaltung in Eingriff, nachdem der Führungsabschnitt 31a erster Ausgestaltung das erste geführte Element 32' freigegeben hat. Der Führungsabschnitt 31b zweiter Ausgestaltung hebt das erste geführte Element 32' während des Eingriffs mittels Zwangsführung an. Durch Kraftübertragung vom Führungsabschnitt 31b zweiter Ausgestaltung über das erste geführte Element 32' und die Hebelvorrichtung 24 auf die Welle 25 rotiert die Rotationseinheit 22 um die Rotationsachse 28. Die Translationseinheit 23 wird dabei vom Antriebssystem 7 weiter entlang der Förderstrecke 5 bewegt.

In Förderrichtung 14 folgt auf den Führungsabschnitt 31b zweiter Ausgestaltung ein Führungsabschnitt 31c dritter Ausgestaltung. Während das erste geführte Element 32' vom Führungsabschnitt 31b zweiter Ausgestaltung freigegeben wird, gelangt das zweite geführte Element 32" mit dem Führungsabschnitt 31c dritter Ausgestaltung in Eingriff. Die Zwangsführung des zweiten geführten Elements 32" entlang des V-förmig gestalteten Führungsabschnitts 31c dritter Ausgestaltung bewirkt eine Fortsetzung der vom Führungsabschnitt 31b zweiter Ausgestaltung eingeleiteten Rotation der Rotationseinheit 22. Während das zweite geführte Element 32" entlang des ersten Segments 33 des Führungsabschnitts 31c dritter Ausgestaltung bewegt wird, rotiert die Rotationseinheit 22 um ungefähr 90°. Während das zweite geführte Element 32" entlang des zweiten Segments 34 des Führungsabschnitts 31c dritter Ausgestaltung bewegt wird, rotiert die Rotationseinheit 22 ungefähr um weitere 90°. Die Rotation der Rotationseinheit 22 bewirkt ein Eintauchen des an der Rotationseinheit befestigten Werkstücks 12 in die Behandlungsflüssigkeit 4.

Während das zweite geführte Element 32" mit dem Führungsabschnitt 31c dritter Ausgestaltung in Eingriff steht, gelangt das dritte geführte Element 32‴ in Eingriff mit einem Führungsabschnitt 31d vierter Ausgestaltung. Der Führungsabschnitt 31d vierter Ausgestaltung bewirkt ein Fortsetzen der Rotation der Rotationseinheit 22 bei gleichbleibender Rotationsrichtung, indem das dritte geführte Element 32‴ entlang des Führungsabschnitts 31c dritter Ausgestaltung in Richtung des Bodens bewegt wird.

Die Führungseinheit 11 umfasst eine Verstellvorrichtung 30. Der Führungsabschnitt 31a erster Ausgestaltung ist mit der Verstellvorrichtung 30 zwischen zwei Arbeitspositionen verstellbar. Die Verstellvorrichtung 30 weist im vorliegenden Ausführungsbeispiel einen Abschnitt zum Führen des Führungselements in Form eines Scherensystems 38 auf, der den Führungsabschnitt 31a erster Ausgestaltung bewegt und führt. Das Scherensystem 38 umfasst eine Schereneinheit 39, ein festes Lager 40 und ein verschiebbares Lager 41. Außerdem umfasst die Verstellvorrichtung 30 eine Einheit zur Kraftübertragung in Form einer Spindel 42, die von einem als Motor 43 ausgebildeten Antriebselement in eine Drehbewegung versetzt wird, und die mit dem verschiebbaren Lager 41 des Scherensystems 38 in kraft- und formschlüssiger Verbindung steht. Eine Drehbewegung der Spindel 42 bewirkt ein Verschieben des verschiebbaren Lagers 41 und je nach Drehsinn von Motor 43 und Spindel 42 ein Entfalten oder ein Zusammenziehen der Schereneinheit 39. Die Schereneinheit 39 ist kraftschlüssig mit dem Führungsabschnitt 31a erster Ausgestaltung verbunden, und überführt daher einen Führungsabschnitt 31a erster Ausgestaltung von einer Arbeitsposition in die andere Arbeitsposition.

In einem weiteren modifizierten Ausführungsbeispiel weist auch der Führungsabschnitt 31c dritter Ausgestaltung eine Verstellvorrichtung mit einem Scherensystem, einer Spindel und einem Motor auf.

Der Fahrwagen 8 wird in diesem Ausführungsbeispiel vorzugsweise kontinuierlich translatorisch entlang der Förderstrecke 5 bewegt, während das erste, das zweite und das dritte geführte Element 32', 32" bzw. 32‴ die Führungsabschnitte erster, zweiter, dritter und vierter Ausgestaltung 31a, 31b, 31c bzw. 31d passieren. In einem modifizierten Ausführungsbeispiel kann ein Fahrwagen 8 aber auch diskontinuierlich entlang der Förderstrecke 5 bewegt werden.

Die geführten Elemente der erfindungsgemäßen Anlage 1 zur Oberflächenbehandlung sind gemäß ihrer unterschiedlichen Funktion unterschiedlich benannt, nämlich als erstes, zweites, drittes und viertes geführtes Element 32', 32", 32‴ bzw. 32ʺʺ. Im ersten Ausführungsbeispiel sind drei von vier unterschiedlich wirkenden, strukturell gleichartigen geführten Elementen vorgesehen. In weiteren Ausführungsbeispielen kommen zum Teil unterschiedliche Anzahlen von derartigen geführten Elementen zum Einsatz, wobei für geführte Elemente gleicher Funktion weiterhin die gleiche Bezeichnung verwendet wird.

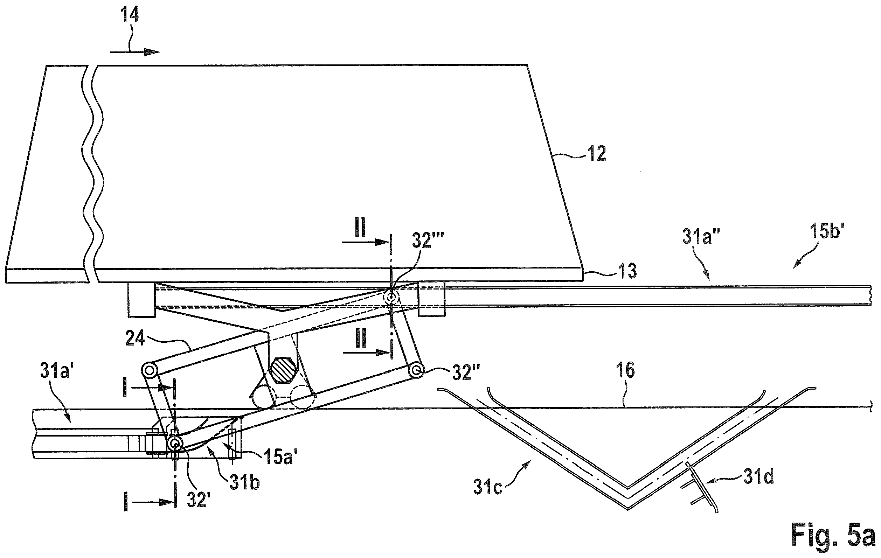

Ein in den Figuren 5a bis 7 dargestelltes zweites Ausführungsbeispiel der Anlage 1 zur Oberflächenbehandlung unterscheidet sich von dem in den Figuren 1 bis 4b dargestellten ersten Ausführungsbeispiel im Wesentlichen dadurch, dass statt des Führungsabschnitts 31a erster Ausgestaltung drei Führungsabschnitte 31a', 31a" und 31a‴ erster Ausgestaltung sowie zusätzlich ein Führungsabschnitt 31e fünfter Ausgestaltung vorgesehen sind. Die drei Führungsabschnitte 31a', 31a" und 31a‴ erster Ausgestaltung sind in Förderrichtung 14 hintereinander angeordnet, sodass ein Fahrwagen 8 die drei Führungsabschnitte 31a', 31a" und 31a‴ nacheinander passiert.

Der Führungsabschnitt 31e fünfter Ausgestaltung ist gebogen ausgebildet und weist an einer Eintrittsöffnung, an der ein drittes geführtes Element 32‴ in diesen Führungsabschnitt eintreten kann, in einer Richtung, in der das dritte geführte Element 32‴ diesen Führungsabschnitt passieren kann, eine Querschnittsverringerung auf. Der kleinste Querschnitt des Führungsabschnitts 31e fünfter Ausgestaltung ist groß genug, damit das dritte geführte Element 32'" mit dem Führungsabschnitt in Eingriff gelangen und diesen passieren kann. Die Querschnittsverringerung erfüllt eine Zentrierfunktion hinsichtlich des dritten geführten Elements 32'". Die gebogene Ausbildung des Führungsabschnitts 31e fünfter Ausgestaltung bewirkt ein Anheben des dritten geführten Elements 32'". Das Anheben des geführten Elements 32‴ führt durch Übertragung von Kräften und Momenten über die Hebelvorrichtung 24 zu einer Rotation der Rotationseinheit 22 des Fahrwagens 8.

In weiterer Unterscheidung zum ersten Ausführungsbeispiel sind der Führungsabschnitt 31a" erster Ausgestaltung und der Führungsabschnitt 31b zweiter Ausgestaltung jeweils zwischen zwei Arbeitspositionen verstellbar ausgebildet. Sowohl der Führungsabschnitt 31a" erster Ausgestaltung als auch der Führungsabschnitt 31b zweiter Ausgestaltung sind jeweils zwischen einer Eingriffsposition und einer Nichteingriffsposition verstellbar ausgestaltet.

Die Eingriffsposition eines Führungsabschnitts ist eine Arbeitsposition, in der der Führungsabschnitt mit einem geführten Element eines Fahrwagens 8 in Eingriff steht und/oder in Eingriff gelangen kann, wenn der Fahrwagen 8 an einer Stelle entlang der Förderstrecke 5 positioniert ist, an der das geführte Element wenigstens zeitweise und/oder teilweise die Kontur des Führungsabschnitts schneidet. Befindet sich der Führungsabschnitt in der Eingriffsposition, dann ist eine Beeinflussung des geführten Elements mit diesem Führungsabschnitt möglich. Eine Beeinflussung erfolgt beispielsweise in Form einer Kraft- und/oder Momentenübertragung auf den Fahrwagen 8, die zu einer Auslenkung des geführten Elements und über die Hebelvorrichtung 24 zu einer Rotation der Rotationseinheit 22 des betreffenden Fahrwagens 8 führen kann.

Die Nichteingriffsposition eines Führungsabschnitts ist eine Arbeitsposition, in der der Führungsabschnitt wenigstens zeitweise nicht mit einem geführten Element eines Fahrwagens 8 in Eingriff steht und/oder nicht in Eingriff gelangen kann. Befindet sich der Führungsabschnitt in der Nichteingriffsposition, dann ist eine Beeinflussung eines geführten Elements mit diesem Führungsabschnitt vorzugsweise nicht möglich. Ein Fahrwagen 8 mit einem darauf angebrachten Tragrahmen 13 für ein Werkstück und/oder einem Werkstück 12 passiert den Führungsabschnitt, ohne mit diesem in Eingriff zu gelangen und ohne dass eine Kraft und/oder ein Moment vom Führungsabschnitt auf ein geführtes Element des Fahrwagens 8 übertragen werden. Dies kann beispielsweise zur Folge haben, dass eine Rotation der Rotationseinheit 22 des betreffenden Fahrwagens 8 ausbleibt, obwohl ein geführtes Element eine Stelle entlang der Förderstrecke 5 passiert, an der ein Eingriff zwischen dem geführten Element und dem Führungsabschnitt stattfindet, falls der Führungsabschnitt sich in der Eingriffsposition befindet.

Über die Frage, ob ein Führungsabschnitt und ein geführtes Element miteinander in Eingriff gelangen oder nicht, entscheidet einerseits die Arbeitsposition des Führungsabschnitts und andererseits die Position des Fahrwagens entlang der Förderstrecke, an dem das geführte Element angeordnet ist.

Der Führungsabschnitt 31b zweiter Ausgestaltung ist mit Hilfe einer Verstellvorrichtung 30 verstellbar, die in diesem Ausführungsbeispiel ein als Motor 43 ausgebildetes Antriebselement, eine als Getriebe 44 ausgebildete Einheit zur Kraftübertragung und einen als Schienenelement 45 ausgebildeten Abschnitt zum Führen eines Führungselements aufweist. Der Motor 43 überträgt eine Kraft auf das Getriebe 44. Das Getriebe 44 ist mit dem Führungsabschnitt 31b zweiter Ausgestaltung kraftschlüssig verbunden und überträgt die Kraft auf diesen. Das Schienenelement 45 setzt die vom Motor 43 übertragene Kraft in eine weitgehend lineare Bewegung des Führungsabschnitts 31b zweiter Ausgestaltung zwischen den Arbeitspositionen um.

Die nicht dargestellte Verstellvorrichtung des Führungsabschnitts 31a" erster Ausgestaltung weist in diesem Ausführungsbeispiel die gleichen Komponenten auf wie die Verstellvorrichtung 30 des Führungsabschnitts 31b zweiter Ausgestaltung.

In einem modifizierten Ausführungsbeispiel sind die Verstellvorrichtung eines Führungsabschnitts und die Verstellvorrichtung eines anderen Führungsabschnitts verschieden ausgebildet.

In einem weiteren modifizierten Ausführungsbeispiel weist eine Verstellvorrichtung alternativ oder zusätzlich zu einer Schereneinheit einen Hydraulik- und/oder PneumatikZylinder auf.

Vorzugsweise sind Führungsabschnitte eines weiteren modifizierten Ausführungsbeispiels zwischen mehr als zwei Arbeitspositionen verstellbar, beispielsweise zwischen drei, vier oder mehr Arbeitspositionen. Eine Arbeitsposition kann beispielsweise in Abhängigkeit eines Werkstücktyps ausgewählt werden. Dabei können mehr als eine Eingriffsposition und/oder mehr als eine Nichteingriffsposition vorgesehen sein.

Der Führungsabschnitt 31a" erster Ausgestaltung und der Führungsabschnitt 31b zweiter Ausgestaltung werden jeweils zwischen den Arbeitspositionen verstellt, während das erste geführte Element 32' bevorzugt mit einem anderen Führungsabschnitt (insbesondere dem Führungsabschnitt 31a' erster Ausgestaltung) in Eingriff steht. Während der Führungsabschnitt 31a' erster Ausgestaltung und der Führungsabschnitt 31b zweiter Ausgestaltung verstellt werden, steht bevorzugt weder das erste noch das zweite noch das dritte geführte Element 32', 32" bzw. 32‴ mit diesen beiden Führungsabschnitten in Eingriff.

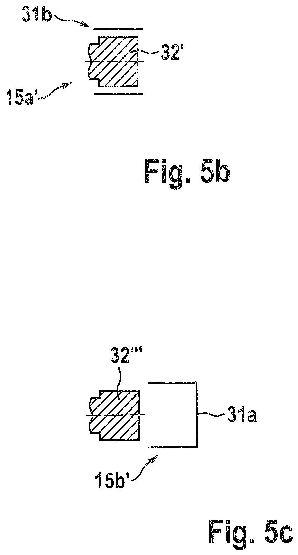

Fig. 5a und Fig. 5b zeigen in einer Seitenansicht bzw. in einem Querschnitt an der Stelle I von Fig. 5a den Führungsabschnitt 31b zweiter Ausgestaltung in einer ihm zugeordneten Eingriffsposition 15a', in der der Führungsabschnitt 31b zweiter Ausgestaltung mit einem ersten geführten Element 32' des Fahrwagens 8 in Eingriff steht, während der Fahrwagen 8 an einer Stelle entlang der Förderstrecke 5 positioniert ist, an der der Führungsabschnitt 31b zweiter Ausgestaltung mit dem ersten geführten Element 32' des Fahrwagens 8 in Eingriff gebracht werden kann. Der Führungsabschnitt 31b zweiter Ausgestaltung überträgt dabei eine Kraft auf das erste geführte Element 32'. Über die Hebelvorrichtung 24 wird ein Moment auf die Rotationseinheit 22 des Fahrwagens 8 übertragen. In Folge rotiert die Rotationseinheit 22 um die Rotationsachse 28, und ein Tragrahmen 13 für ein Werkstück und/oder ein Werkstück 12 rotieren und/oder werden verschwenkt.

Fig. 5a und Fig. 5c zeigen in einer Seitenansicht bzw. in einem Querschnitt an der Stelle II von Fig. 5a den Führungsabschnitt 31a" erster Ausgestaltung in einer ihm zugeordneten Nichteingriffsposition 15b', in der das dritte geführte Element 32‴ des Fahrwagens 8 mit dem Führungsabschnitt 31a" erster Ausgestaltung nicht in Eingriff steht. Das dritte geführte Element 32‴passiert mit dem Fahrwagen 8 den Führungsabschnitt 31a" erster Ausgestaltung, ohne dass der Führungsabschnitt 31a" erster Ausgestaltung mit dem dritten geführten Element 32‴ in Eingriff gelangt, auf dieses einwirkt und/oder dieses beeinflusst.

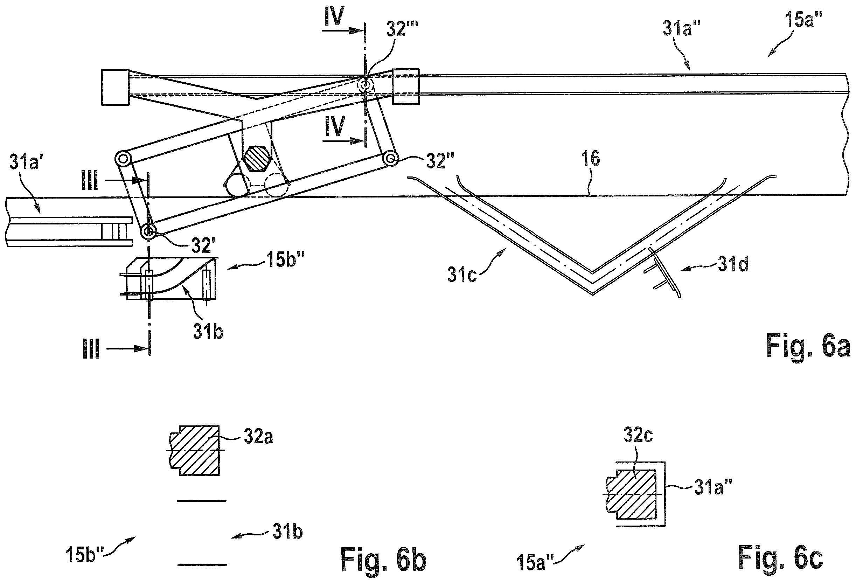

Fig. 6a und Fig. 6b zeigen in einer Seitenansicht bzw. in einem Querschnitt an der Stelle III von Fig. 6a den Führungsabschnitt 31b zweiter Ausgestaltung in einer ihm zugeordneten Nichteingriffsposition 15b", in der das erste geführte Element 32' des Fahrwagens 8 mit dem Führungsabschnitt 31b zweiter Ausgestaltung nicht in Eingriff steht. Der Fahrwagen 8 ist an einer Stelle entlang der Förderstrecke 5 positioniert, an der der Führungsabschnitt 31b zweiter Ausgestaltung mit dem ersten geführten Element 32' des Fahrwagens 8 in Eingriff gebracht werden kann, wenn der Führungsabschnitt 31b zweiter Ausgestaltung sich in der Eingriffsposition 15a' befindet. Dadurch, dass ein Eingriff des ersten geführten Elements 32' des Fahrwagens 8 in den Führungsabschnitt 31b zweiter Ausgestaltung ausbleibt, wird keine Kraft vom Führungsabschnitt 31b zweiter Ausgestaltung auf das erste geführte Element 32' übertragen. Das erste geführte Element 32' wird nicht ausgelenkt. In Folge dessen bleibt eine Rotation einer Rotationseinheit 22 des Fahrwagens 8 aus.

Fig. 6a und Fig. 6c zeigen in einer Seitenansicht bzw. in einem Querschnitt an der Stelle IV von Fig. 6a den Führungsabschnitt 31a" erster Ausgestaltung in einer ihm zugeordneten Eingriffsposition 15a", in der der Führungsabschnitt 31a" erster Ausgestaltung mit dem dritten geführten Element 32‴ des Fahrwagens 8 in Eingriff steht. Dabei erfolgt eine Kraftübertragung vom Führungsabschnitt 31a" erster Ausgestaltung auf das dritte geführte Element 32‴ des Fahrwagens 8. Die jeweilige Ausgestaltung des Führungsabschnitts 31a" erster Ausgestaltung und des dritten geführten Elements 32‴ führt dazu, dass kein Moment auf die Rotationsachse 22 des Fahrwagens 8 übertragen wird, obwohl der Führungsabschnitt 31a" erster Ausgestaltung und das dritte geführte Element 32‴ des Fahrwagens 8 miteinander in Eingriff stehen. Durch das ausbleibende Moment finden eine Rotation und/oder ein Verschwenken des Tragrahmens 13 für ein Werkstück und/oder des Werkstücks 12 vorzugsweise nicht statt.

Die beiden Arbeitspositionen des Führungsabschnitts 31b zweiter Ausgestaltung sind in diesem Ausführungsbeispiel wenigstens abschnittsweise übereinander angeordnet. Dadurch können der Führungsabschnitt 31b zweiter Ausgestaltung und eine Verstellvorrichtung 30 des Führungsabschnitts 31b zweiter Ausgestaltung an einer, insbesondere senkrecht zur Förderrichtung ausgebildeten, Seitenwandung des Behandlungsbehälters 3 angebracht sein. Beim Verstellen des Führungsabschnitts 31b zweiter Ausgestaltung zwischen den Arbeitspositionen wird dieser im Wesentlichen linear, vorzugsweise senkrecht zur Förderrichtung, auf oder ab bewegt. Die übereinander angeordneten Arbeitspositionen bewirken außerdem, dass beim Verstellen des Führungsabschnitts 31b zweiter Ausgestaltung in eine Nichteingriffsposition dieser aus einem Bereich entfernt wird, der von Teilen der Translationseinheit 23 und/oder der Rotationseinheit 22 bei Ihrer Bewegung entlang der Förderstrecke 5 überstrichen wird.

Die beiden Arbeitspositionen des Führungsabschnitts 31a" erster Ausgestaltung sind in diesem Ausführungsbeispiel nebeneinander angeordnet. Beim Verstellen des Führungsabschnitts 31a" erster Ausgestaltung zwischen den Arbeitspositionen wird dieser im Wesentlichen linear, vorzugsweise in horizontaler Richtung, bewegt. Die nebeneinander angeordneten Arbeitspositionen bewirken, dass beim Verstellen des Führungsabschnitts 31a" erster Ausgestaltung in eine Nichteingriffsposition dieser aus einem Bereich entfernt wird, der von Teilen der Translationseinheit 23 und/oder der Rotationseinheit 22 bei Ihrer Bewegung entlang der Förderstrecke 5 überstrichen wird.

In einem weiteren modifizierten Ausführungsbeispiel werden die Führungsabschnitte beim Verstellen zwischen den Arbeitspositionen auf einer gekrümmten Bahn bewegt.

Der Führungsabschnitt 31b zweiter Ausgestaltung und der Führungsabschnitt 31a" erster Ausgestaltung befinden sich in unterschiedlichen Arbeitspositionen, während der Fahrwagen 8 an einer Stelle entlang der Förderstrecke 5 positioniert ist, an der das erste geführte Element 32' und/oder das dritte geführte Element 32‴ mit dem Führungsabschnitt 31b zweiter Ausgestaltung beziehungsweise mit dem Führungsabschnitt 31a" erster Ausgestaltung in Eingriff gebracht werden können. Während sich der eine Führungsabschnitt in der Eingriffsposition befindet, befindet sich der andere Führungsabschnitt in der Nichteingriffsposition. Damit wirkt zu einem bestimmten Zeitpunkt immer nur einer der beiden Führungsabschnitte auf eines der beiden geführten Elemente ein und/oder beeinflusst diese.

Befindet sich der Führungsabschnitt 31b zweiter Ausgestaltung in der Eingriffsposition und der Führungsabschnitt 31a" erster Ausgestaltung in der Nichteingriffsposition, dann wirkt nur der Führungsabschnitt 31b zweiter Ausgestaltung auf ein geführtes Element, insbesondere auf das erste geführte Element 32', ein, und/oder überträgt eine Kraft und/oder ein Moment auf dieses erste geführte Element 32'. Der Führungsabschnitt 31b zweiter Ausgestaltung bewirkt durch Anheben des ersten geführten Elements 32' eine Auslenkung der Rotationseinheit 22 und ein Verschwenken des Werkstücks 12. Eine Einwirkung des Führungsabschnitts 31a" erster Ausgestaltung auf das dritte geführte Element 32‴ und/oder eine Beeinflussung desselben bleiben dabei vorzugsweise aus.

Befindet sich hingegen der Führungsabschnitt 31b zweiter Ausgestaltung in der Nichteingriffsposition und der Führungsabschnitt 31a" erster Ausgestaltung in der Eingriffsposition, dann wirkt nur der Führungsabschnitt 31a" erster Ausgestaltung auf ein geführtes Element ein, und zwar auf das dritte geführte Element 32'", und/oder beeinflusst dieses. Der Führungsabschnitt 31b zweiter Ausgestaltung führt das dritte geführte Element 32‴ weitgehend linear und bewirkt damit eine Translation eines Fahrwagens 8 entlang der und parallel zur Förderstrecke 5. Eine Einwirkung des Führungsabschnitts 31b zweiter Ausgestaltung auf das erste geführte Element 32' und/oder eine Beeinflussung desselben bleiben dabei vorzugsweise aus.

Die im zweiten Ausführungsbeispiel beschriebene Anlage 1 zur Oberflächenbehandlung funktioniert wie folgt. Der Fahrwagen 8 wird in Förderrichtung 14 entlang der Förderstrecke 5 bewegt. Auf dem Fahrwagen 8 können optional ein Tragrahmen 13 für ein Werkstück und/oder ein Werkstück 12 befestigt sein. Bei schwankender Auslastung der Anlage 1 zur Oberflächenbehandlung kann es beispielsweise sein, dass zeitweise auf jedem (ersten), jedem zweiten oder jedem dritten Fahrwagen 8 ein Tragrahmen 13 für ein Werkstück und/oder ein Werkstück 12 befestigt sind. Es kann also vorkommen, dass auf einem Fahrwagen 8 weder ein Tragrahmen 13 für ein Werkstück noch ein Werkstück 12 befestigt sind. Eine Steuerungsvorrichtung ermittelt mit Hilfe eines Sensors, ob auf dem Fahrwagen 8 ein Tragrahmen 13 für ein Werkstück und/oder ein Werkstück 12 festgelegt sind oder nicht. Anschließend ermittelt die Steuerungsvorrichtung, in welcher Arbeitsposition sich die verstellbaren Führungsabschnitte jeweils befinden. Sind auf dem Fahrwagen 8 ein Tragrahmen 13 für ein Werkstück und/oder ein Werkstück 12 festgelegt, bewirkt die Steuerungsvorrichtung, dass der Führungsabschnitt 31b zweiter Ausgestaltung in die Eingriffsposition 15a' verstellt wird, falls der Führungsabschnitt 31b zweiter Ausgestaltung sich zu dem Zeitpunkt in der Nichteingriffsposition 15b" befindet.

Entsprechend wird der Führungsabschnitt 31a" erster Ausgestaltung in die Nichteingriffsposition 15b' verstellt, falls auf dem Fahrwagen 8 ein Tragrahmen 13 für ein Werkstück und/oder ein Werkstück 12 festgelegt sind und der Führungsabschnitt 31a" erster Ausgestaltung sich zu dem Zeitpunkt in der Eingriffsposition 15a" befindet.

Sind ein Tragrahmen 13 für ein Werkstück und/oder ein Werkstück 12 auf dem Fahrwagen 8 festgelegt, erfolgt die Bewegung des Fahrwagens 8 entlang der Förderstrecke 5 zunächst auf die weitgehend gleiche Art wie im ersten Ausführungsbeispiel. Insofern kann auf die Beschreibung des ersten Ausführungsbeispiels Bezug genommen werden. Durch Rotation der Rotationseinheit 22 des Fahrwagens 8 wird das Werkstück 12 wenigstens teilweise, vorzugsweise vollständig, in die Behandlungsflüssigkeit 4 eingetaucht.

Im vorliegenden zweiten Ausführungsbeispiel wird das Werkstück 12 im zumindest teilweise eingetauchten Zustand erneut einer reinen Translation unterzogen. Das heißt, der optional teilweise eingetauchte Fahrwagen 8 wird mit dem eingetauchten Werkstück 12 entlang der Förderstrecke 5 bewegt. Dabei wird das dritte geführte Element 32‴ von einem Führungsabschnitt 31a‴ erster Ausgestaltung geführt. Am in Förderrichtung 14 zweiten Ende des Behandlungsbehälters 3 erfolgt durch einen weiteren, nicht dargestellten Führungsabschnitt 31c dritter Ausgestaltung eine weitere Rotation bei gleichzeitiger Translation. Dabei rotiert die Rotationseinheit 22 des Fahrwagens 8 um die Rotationsachse 28 und hebt das Werkstück 12 aus der Behandlungsflüssigkeit 4 heraus.

In einem alternativen Ausführungsbeispiel erfährt ein Werkstück im eingetauchten Zustand eine zeitweise von einer Rotation überlagerte Translation.

Wird hingegen ein leerer Fahrwagen 8 entlang der Förderstrecke 5 bewegt, kann durch Verstellen der Führungsabschnitte erreicht werden, dass der leere Fahrwagen 8 optional nicht, vorzugsweise auch nicht zum Teil, in die Behandlungsflüssigkeit eintaucht, sondern vollständig oberhalb der Oberfläche der Behandlungsflüssigkeit 4 und damit außerhalb der Behandlungsflüssigkeit 4 bleibt. Selbstverständlich kann jedoch jederzeit auch ein leerer Fahrwagen 8 in die Behandlungsflüssigkeit eingetaucht werden.

Die Steuerungsvorrichtung ermittelt zunächst mit Hilfe des Sensors, ob der Fahrwagen 8 leer ist. Anschließend ermittelt die Steuerungsvorrichtung, in welcher Arbeitsposition sich die verstellbaren Führungsabschnitte jeweils befinden.

Ist der Fahrwagen 8 leer, bewirkt die Steuerungsvorrichtung, dass der Führungsabschnitt 31b zweiter Ausgestaltung in die zweite Arbeitsposition 15b", die Nichteingriffsposition, verstellt wird, falls der Führungsabschnitt 31b zweiter Ausgestaltung sich zu dem Zeitpunkt in der ersten Arbeitsposition 15a', der Eingriffsposition, befindet. Dadurch wirkt der Führungsabschnitt 31b zweiter Ausgestaltung nicht auf ein geführtes Element des Fahrwagens 8, insbesondere auf ein erstes geführtes Element 32', ein. Eine Rotation der Rotationseinheit 22 des Fahrwagens 8 bleibt vorzugsweise aus.

Entsprechend wird der Führungsabschnitt 31a" erster Ausgestaltung in die erste Arbeitsposition 15a", die Eingriffsposition, verstellt, falls kein Tragrahmen 13 für ein Werkstück und/oder kein Werkstück 12 auf dem Fahrwagen 8 festgelegt sind und/oder der Führungsabschnitt 31a" erster Ausgestaltung sich zu dem Zeitpunkt in der zweiten Arbeitsposition 15b', der Nichteingriffsposition, befindet. Dadurch können ein drittes geführtes Element 32‴ und der Führungsabschnitt 31a" erster Ausgestaltung miteinander in Eingriff gelangen. Der Eingriff bewirkt vorzugsweise eine weitgehend lineare und/oder parallel zur Förderstrecke 5 ausgerichtete Führung des Fahrwagens 8.

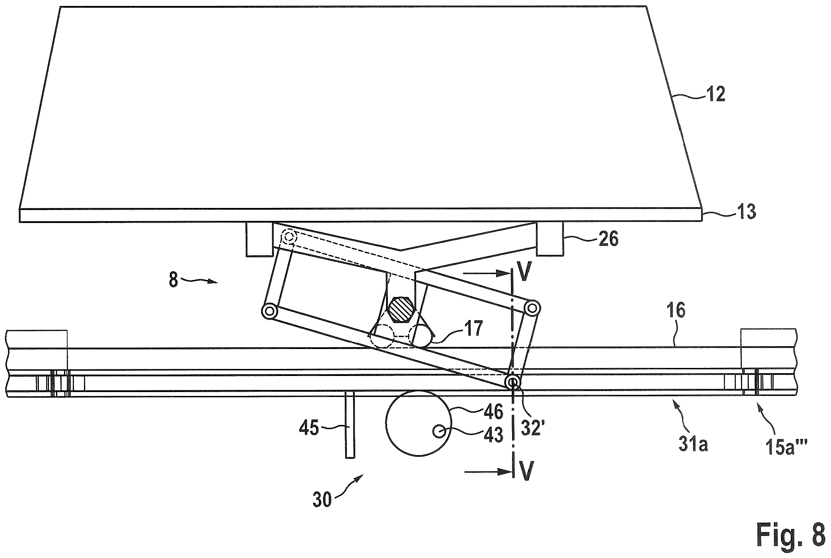

Ein in den Figuren 8 bis 10 dargestelltes drittes Ausführungsbeispiel unterscheidet sich vom ersten und vom zweiten Ausführungsbeispiel im Wesentlichen dadurch, dass ein Führungsabschnitt 31a erster Ausgestaltung verstellt wird, während ein erstes geführtes Element 32' mit dem Führungsabschnitt 31a erster Ausgestaltung in Eingriff steht.

Der Führungsabschnitt 31a erster Ausgestaltung kann zwei Arbeitspositionen einnehmen.

Die erste Arbeitsposition 15a‴, die erste Eingriffsposition, ist eine Position, in der das erste geführte Element 32' mit dem Führungsabschnitt 31a erster Ausgestaltung in Eingriff gebracht werden kann, wenn der Fahrwagen 8 sich an einer Stelle entlang der Förderstrecke 5 befindet, an der das erste geführte Element 32' mit dem Führungsabschnitt 31a erster Ausgestaltung in Eingriff stehen kann. Die erste Arbeitsposition 15a‴ des Führungsabschnitts 31a erster Ausgestaltung ermöglicht ein Einwirken desselben auf das erste geführte Element 32' und resultiert in einer weitgehend linearen Führung des geführten Elements 32' entlang der und im Wesentlichen parallel zur Förderstrecke 5.

Während das erste geführte Element 32' mit dem Führungsabschnitt 31a erster Ausgestaltung in Eingriff steht, wird der Führungsabschnitt 31a erster Ausgestaltung in die zweite Arbeitsposition 15b‴ verstellt, und wirkt dabei über das erste geführte Element 32' und die Hebelvorrichtung 24 auf die Rotationseinheit 22 ein. Die Rotationseinheit 22 und ein auf dem Fahrwagen 8 festgelegtes Werkstück 12 werden dabei verstellt. In diesem Ausführungsbeispiel sind also beide Arbeitspositionen 15a‴ und 15b‴ des Führungsabschnitts 31a erster Ausgestaltung Eingriffspositionen.

Die genaue Position, die der Führungsabschnitt 31a erster Ausgestaltung insbesondere in einer zweiten Arbeitsposition 15b‴einnimmt, sowie die Anzahl an unterschiedlichen Arbeitspositionen, die auch drei oder mehr betragen kann, werden anhand der Beschaffenheit des Werkstücks 12 festgelegt.

Die Verstellvorrichtung 30 in diesem Ausführungsbeispiel umfasst ein als Motor 43 ausgebildetes Antriebselement, eine als Exzentereinheit 46 ausgebildete Einheit zur Kraftübertragung und einen als Schienenelement 45 ausgebildeten Abschnitt zum Führen des Führungselements. Der Motor 43 versetzt die Exzentereinheit 46 in eine exzentrische Rotation und verstellt dabei den Führungsabschnitt 31a erster Ausgestaltung.

In einem weiteren nicht dargestellten Ausführungsbeispiel wird ein Führungsabschnitt verstellt, während ein bestimmtes geführtes Element mit diesem Führungsabschnitt in Eingriff steht und während ein Werkstück, das auf dem Fahrwagen befestigt ist, der dieses bestimmte geführte Element umfasst, in die Behandlungsflüssigkeit eingetaucht ist. Dabei kann der Führungsabschnitt während des gegenseitigen Eingriffs der Führungselemente ineinander insbesondere mehrfach zwischen zwei oder mehr Arbeitspositionen verstellt werden.

In einem weiteren nicht dargestellten Ausführungsbeispiel ist alternativ oder zusätzlich zu einem Führungsabschnitt ein geführtes Element mittels einer Verstellvorrichtung zwischen zwei Arbeitspositionen verstellbar. Dadurch kann ein Eingriff von einem geführten Element in einen Führungsabschnitt und/oder eine Kraft- und/oder Momentenübertragung zwischen den Führungselementen durch das Verstellen des geführten Elements beeinflusst, insbesondere ermöglicht oder optional verhindert werden.

In einem weiteren nicht dargestellten Ausführungsbeispiel sind die in den drei anhand der Figuren beschriebenen Ausführungsbeispielen verstellbaren Führungsabschnitte alle verstellbar ausgebildet.

Insbesondere ist es von Vorteil, wenn in einer Anlage 1 zur Oberflächenbehandlung sowohl solche Führungsabschnitte vorgesehen sind, die verstellt werden können, während ein geführtes Element mit diesen Führungsabschnitten in Eingriff steht, als auch solche Führungsabschnitte, die verstellt werden können, während ein geführtes Element von diesen Führungsabschnitten freigegeben ist.

Besonders bevorzugt kann ein Führungsabschnitt verstellbar sein sowohl während der Führungsabschnitt mit einem geführten Element in Eingriff steht, als auch während der Führungsabschnitt mit keinem geführten Element in Eingriff steht.

### Bezugszeichenliste

- 1: Anlage zur Oberflächenbehandlung
- 2: Fördersystem
- 3: Behandlungsbehälter
- 4: Behandlungsflüssigkeit
- 5: Förderstrecke
- 6: Rückführstrecke
- 7: Antriebssystem
- 8: Fahrwagen
- 9: Erster Bereich für die Werkstückübergabe
- 10: Zweiter Bereich für die Werkstückübergabe
- 11: Führungseinheit
- 12: Werkstück
- 13: Tragrahmen für ein Werkstück
- 14: Förderrichtung
- 15a': Eingriffsposition des Führungsabschnitts 31b zweiter Ausgestaltung
- 15a": Eingriffsposition des Führungsabschnitts 31a" erster Ausgestaltung
- 15a‴: Erste Eingriffsposition des Führungsabschnitts 31a erster Ausgestaltung
- 15b': Nichteingriffsposition des Führungsabschnitts 31a" erster Ausgestaltung
- 15b": Nichteingriffsposition des Führungsabschnitts 31b zweiter Ausgestaltung
- 15b‴: Zweite Eingriffsposition des Führungsabschnitts 31a erster Ausgestaltung
- 16: Schienenabschnitt
- 17: Stützelement
- 18: Vertikale Mittelebene
- 19: Antriebseinheit
- 20: Vorrichtung zur Kraftübertragung
- 21: Umlenkrolle
- 22: Rotationseinheit
- 23: Translationseinheit
- 24: Hebelvorrichtung
- 25: Welle
- 26: Vorrichtung zur Aufnahme eines Werkstücks
- 27: Verbindungselement
- 28: Rotationsachse
- 29: Führungselement
- 30: Verstellvorrichtung
- 31a, 31a', 31a", 31a‴: Führungsabschnitte erster Ausgestaltung
- 31b: Führungsabschnitt zweiter Ausgestaltung
- 31c: Führungsabschnitt dritter Ausgestaltung
- 31d: Führungsabschnitt vierter Ausgestaltung
- 31e: Führungsabschnitt fünfter Ausgestaltung
- 31α: Oberer Teil des Führungsabschnitts 31b zweiter Ausgestaltung
- 31β: Unterer Teil des Führungsabschnitts 31b zweiter Ausgestaltung
- 31γ: Oberer Teil des Führungsabschnitts 31a erster Ausgestaltung
- 31δ: Unterer Teil des Führungsabschnitts 31a erster Ausgestaltung
- 32', 32", 32'", 32"": Erstes, zweites, drittes bzw. viertes geführtes Element
- 33: Erstes Segment des Führungsabschnitts
- 34: Zweites Segment des Führungsabschnitts
- 35: Ebene einer Hebelvorrichtung
- 38: Scherensystem
- 39: Schereneinheit
- 40: Festes Lager
- 41: Verschiebbares Lager
- 42: Spindel
- 43: Motor
- 44: Getriebe
- 45: Schienenelement
- 46: Exzentereinheit

## Patentansprüche

1. Fördersystem (2) für Werkstücke (12) mit einer Förderstrecke (5), einem Antriebssystem (7) und einem Fahrwagen (8), wobei
das Antriebssystem eine Antriebseinheit (19) zum Vortrieb des Fahrwagens entlang der Förderstrecke aufweist, wobei
der Fahrwagen eine Vorrichtung (26) zur Aufnahme eines Werkstücks aufweist, wobei dem Antriebssystem und dem Fahrwagen eine Führungseinheit (11) zugeordnet ist, die mindestens zwei Führungselemente (29) aufweist, wobei
wobei ein Führungselement als ein dem Antriebssystem zugeordneter Führungsabschnitt (31a, 31a', 31a", 31a'", 31b, 31c, 31d, 31e) und ein Führungselement als ein dem Fahrwagen zugeordnetes geführtes Element (32', 32", 32‴, 32ʺʺ) ausgebildet sind, wobei der Führungsabschnitt und das geführte Element wenigstens abschnittsweise miteinander in Eingriff stehen,
**dadurch gekennzeichnet, dass** wenigstens ein Führungselement zwischen wenigstens zwei Arbeitspositionen verstellbar ist,
wobei eine Verstellvorrichtung (30) zum Verstellen des Führungselements zwischen den Arbeitspositionen vorhanden ist, die ein Antriebselement, eine Einheit zur Kraftübertragung und/oder einen Abschnitt zum Führen des Führungselements aufweist.

2. Fördersystem nach Anspruch 1, wobei die Führungseinheit (11) mindestens zwei Führungsabschnitte (31a, 31a', 31a", 31a'", 31b, 31c, 31d, 31e) aufweist, die zueinander unterschiedlich konfiguriert sind und/oder einen Führungsabschnitt aufweist, der sich entlang der Förderstrecke (5) erstreckt und an verschiedenen Stellen der Förderstrecke unterschiedlich konfiguriert ist.

3. Fördersystem nach einem der Ansprüche 1 oder 2, wobei wenigstens ein bestimmter Führungsabschnitt (31a, 31a', 31a", 31a'", 31b, 31c, 31d, 31e) eine erste Arbeitsposition (15a', 15a") aufweist, in der dieser mit einem bestimmten geführten Element (32', 32", 32‴, 32ʺʺ) in Eingriff gebracht und ein Verstellen des Fahrwagens (8) erzielt werden kann, während der Fahrwagen an einer bestimmten Stelle entlang der Förderstrecke (5) positioniert ist, und eine zweite Arbeitsposition (15b', 15b"), in der das geführte Element freigegeben ist, während der Fahrwagen an der bestimmten Stelle entlang der Förderstrecke positioniert ist.

4. Fördersystem nach Anspruch 1, wobei das Verstellen eines Führungsabschnitts (31a, 31a', 31a", 31a'", 31b, 31c, 31d, 31e) erfolgt, während ein geführtes Element (32', 32", 32‴, 32ʺʺ) mit diesem Führungsabschnitt in Eingriff steht.

5. Fördersystem nach einem der Ansprüche 1 bis 4, wobei eine Steuerungsvorrichtung vorhanden ist, die das Verstellen eines Führungselements (29) zwischen den Arbeitspositionen (15a', 15b', 15a", 15b", 15a'", 15b'") steuert, wobei die Steuerungsvorrichtung das Verstellen des Führungselements in Abhängigkeit von einem Beladungszustand eines Fahrwagens (8) und/oder in Abhängigkeit von einem Werkstücktyp steuert, während mindestens ein geführtes Element (32', 32", 32‴, 32"") mit einem Führungsabschnitt (31a, 31a', 31a", 31a'", 31b, 31c, 31d, 31e) in Eingriff steht.

6. Anlage zur Oberflächenbehandlung mit einem Fördersystem (2) nach einem der Ansprüche 1 bis 5.

7. Verfahren zum Betreiben eines Fördersystems (2) für Werkstücke (12) mit einer Förderstrecke (5), einem Antriebssystem (7) und einem Fahrwagen (8), der mittels eines Antriebssystems entlang der Förderstrecke bewegt wird, wobei dem Antriebssystem und dem Fahrwagen eine Führungseinheit (11) zugeordnet ist, die mindestens zwei Führungselemente (29) aufweist,
wobei ein Führungselement als ein dem Antriebssystem zugeordneter Führungsabschnitt (31a, 31a', 31a", 31a‴, 31b, 31c, 31d, 31e) und ein Führungselement als ein dem Fahrwagen zugeordnetes geführtes Element (32', 32", 32‴, 32‴) ausgebildet ist, wobei der Führungsabschnitt und das geführte Element wenigstens abschnittsweise miteinander in Eingriff stehen,
bei dem die Förderstrecke einen Schienenabschnitt (16) aufweist, entlang dessen der Fahrwagen bewegt wird, und entlang dessen mindestens ein geführtes Element (32', 32", 32‴, 32ʺʺ) in einen Führungsabschnitt (31a, 31a', 31a", 31a‴, 31b, 31c, 31d, 31e) eingreift,
**dadurch gekennzeichnet, dass**
eine Verstellvorrichtung (30) zum Verstellen eines Führungselements zwischen wenigstens zwei Arbeitspositionen vorgesehen ist, die ein Antriebselement, eine Einheit zur Kraftübertragung und/oder einen Abschnitt zum Führen des Führungselements aufweist,
bei dem ein Führungselement mittels der Verstellvorrichtung_zwischen wenigstens zwei Arbeitspositionen (15a', 15b', 15a", 15b", 15a'", 15b‴) verstellbar ist.

8. Verfahren nach Anspruch 7, bei dem eine Steuerungsvorrichtung das Verstellen des Führungselements (29) in Abhängigkeit von einem Beladungszustand des Fahrwagens (8) und/oder in Abhängigkeit von einem auf dem Fahrwagen festgelegten Werkstücktyp steuert.

9. Verfahren nach einem der Ansprüche 7 oder 8, bei dem ein Führungsabschnitt (31a, 31a', 31a", 31a'", 31b, 31c, 31d, 31e) zwischen zwei Arbeitspositionen (15a', 15b', 15a", 15b") verstellt wird, wobei die erste Arbeitsposition (15a', 15a") eine Eingriffsposition ist, in der das geführte Element (32', 32", 32'", 32"") mit dem Führungsabschnitt in Eingriff gelangt, wenn der Führungsabschnitt die Eingriffsposition einnimmt während der Fahrwagen eine bestimmte Position entlang der Förderstrecke einnimmt, und die zweite Arbeitsposition (15b', 15b") eine Nichteingriffsposition ist, in der das geführte Element mit dem Führungsabschnitt optional nicht in Eingriff gelangt während der Fahrwagen dieselbe bestimmte Position entlang der Förderstrecke einnimmt, und bei dem das geführte Element den Führungsabschnitt passiert, während der Führungsabschnitt die Nichteingriffsposition einnimmt.

10. Verfahren nach einem der Ansprüche 7 oder 8, bei dem ein Führungsabschnitt (31a, 31a', 31a", 31a'", 31b, 31c, 31d, 31e) verstellt wird, während ein geführtes Element (32', 32", 32‴, 32ʺʺ) mit diesem Führungsabschnitt in Eingriff steht.

11. Verfahren nach einem der Ansprüche 7, 8 oder 10, bei dem ein Verstellen des Führungsabschnitts (31a, 31a', 31a", 31a'", 31b, 31c, 31d, 31e) in einer Drehung der Rotationseinheit (22) des Fahrwagens (8) um eine Rotationsachse (28) resultiert.

## Claims

1. Conveyor system (2) for workpieces (12), having a conveyor section (5), a drive system (7) and a carriage (8), wherein
the drive system has a drive unit (19) for driving the carriage forward along the conveyor section, wherein
the carriage has a device (26) for holding a workpiece, wherein a guide unit (11) which has at least two guide elements (29) is assigned to the drive system and the carriage,
wherein one guide element is designed as a guide section (31a, 31a', 31a", 31a‴, 31b, 31c, 31d, 31e) assigned to the drive system, and one guide element is designed as a guided element (32', 32", 32‴, 32"") assigned to the carriage, wherein the guide section and the guided element are in engagement with one another, at least in some sections,
**characterized in that** at least one guide element is adjustable between at least two working positions,
wherein there is an adjusting device (30) for adjusting the guide element between the working positions, which has a drive element, a unit for transmitting force and/or a section for guiding the guide element.

2. Conveyor system according to Claim 1, wherein the guide unit (11) has at least two guide sections (31a, 31a', 31a", 31a‴, 31b, 31c, 31d, 31e) which are configured differently from one another, and/or has a guide section which extends along the conveyor section (5) and is configured differently at different points of the conveyor section.

3. Conveyor system according to either of Claims 1 and 2, wherein at least one specific guide section (31a, 31a', 31a", 31a‴, 31b, 31c, 31d, 31e) has a first working position (15a', 15a"), in which this section is brought into engagement with a specific guided element (32', 32", 32‴, 32"") and an adjustment of the carriage (8) can be achieved while the carriage is positioned at a specific point along the conveyor section (5), and a second working position (15b', 15b"), in which the guided element is released while the carriage is positioned at the specific point along the conveyor section.

4. Conveyor system according to Claim 1, wherein the adjustment of a guide section (31a, 31a', 31a", 31a‴, 31b, 31c, 31d, 31e) is carried out while a guided element (32', 32", 32‴, 32"") is in engagement with this guide section.

5. Conveyor system according to one of Claims 1 to 4, wherein there is a control device which controls the adjustment of a guide element (29) between the working positions (15a', 15b', 15a", 15b", 15a‴, 15b‴), wherein the control device controls the adjustment of the guide element depending on a loading state of a carriage (8) and/or depending on a workpiece type while at least one guided element (32', 32", 32‴, 32"") is in engagement with a guide section (31a, 31a', 31a", 31a‴, 31b, 31c, 31d, 31e).

6. Plant for surface treatment having a conveyor system (2) according to one of Claims 1 to 5.

7. Method for operating a conveyor system (2) for workpieces (12), having a conveyor section (5), a drive system (7) and a carriage (8), which is moved along the conveyor section by means of a drive system, wherein a guide unit (11) which has at least two guide elements (29) is assigned to the drive system and the carriage, wherein one guide element is designed as a guide section (31a, 31a', 31a", 31a‴, 31b, 31c, 31d, 31e) assigned to the drive system, and one guide element is designed as a guided element (32', 32", 32‴, 32"") assigned to the carriage, wherein the guide section and the guided element are in engagement with one another, at least in some sections,
in which the conveyor section has a rail section (16), along which the carriage is moved and along which at least one guided element (32', 32", 32‴, 32ʺʺ) engages in a guide section (31a, 31a', 31a", 31a‴, 31b, 31c, 31d, 31e),
**characterized in that**
an adjusting device (30) which has a drive element, a unit for transmitting force and/or a section for guiding the guide element is provided for adjusting a guide element between at least two working positions,
in which a guide element is adjustable between at least two working positions (15a', 15b', 15a", 15b", 15a‴, 15b‴) by means of the adjusting device.

8. Method according to Claim 7, in which a control device controls the adjustment of the guide element (29) depending on a loading state of the carriage (8) and/or depending on a workpiece type fixed on the carriage.

9. Method according to either of Claims 7 and 8, in which a guide section (31a, 31a', 31a", 31a‴, 31b, 31c, 31d, 31e) is adjusted between two working positions (15a', 15b', 15a", 15b"), wherein the first working position (15a', 15a") is an engaged position, in which the guided element (32', 32", 32‴, 32"") comes into engagement with the guide section if the guide section assumes the engaged position while the carriage assumes a specific position along the conveyor section, and the second working position (15b', 15b") is a disengaged position, in which the guided element optionally does not come into engagement with the guide section while the carriage assumes the same specific position along the conveyor section, and in which the guided element passes the guide section while the guide section assumes the disengaged position.

10. Method according to either of Claims 7 and 8, in which a guide section (31a, 31a', 31a", 31a‴, 31b, 31c, 31d, 31e) is adjusted while a guided element (32', 32", 32‴, 32ʺʺ) is in engagement with this guide section.

11. Method according to one of Claims 7, 8 or 10, in which an adjustment of the guide section (31a, 31a', 31a", 31a‴, 31b, 31c, 31d, 31e) results in a rotation of the rotation unit (22) of the carriage (8) about an axis of rotation (28).

## Revendications

1. Système de transport (2) destiné à des pièces (12), ledit système de transport comprenant une section de transport (5), un système d'entraînement (7) et un chariot (8),
le système d'entraînement comportant une unité d'entraînement (19) destinée à faire avancer le chariot le long de la section de transport,
le chariot comportant un dispositif (26) destiné à recevoir une pièce, une unité de guidage (11), qui comporte au moins deux éléments de guidage (29), étant associée au système d'entraînement et au chariot,
un élément de guidage étant conçu comme une portion de guidage (31a, 31a', 31a", 31a"' , 31b, 31c, 31d, 31e) associée au système d'entraînement et un élément de guidage étant conçu comme un élément guidé (32', 32'', 32‴, 32ʺʺ) associé au chariot, la portion de guidage et l'élément guidé étant en engagement l'un avec l'autre au moins par portions,
**caractérisé en ce qu'**au moins un élément de guidage est réglable entre au moins deux positions de travail,
un dispositif de réglage (30) étant prévu pour régler l'élément de guidage entre les positions de travail et comportant un élément d'entraînement, une unité de transmission de force et/ou une portion de guidage de l'élément de guidage.

2. Système de transport selon la revendication 1, l'unité de guidage (11) comportant au moins deux portions de guidage (31a, 31a', 31a", 31a''', 31b, 31c, 31d, 31e) qui sont conçus différemment l'un de l'autre et/ou qui comporte une portion de guidage qui s'étend le long de la section de transport (5) et qui est conçue de manière différente en différents points de la section de transport.

3. Système de transport selon l'une des revendications 1 ou 2, au moins une portion de guidage déterminée (31a, 31a', 31a'', 31a''', 31b, 31c, 31d, 31e) présentant une première position de travail (15a', 15aʺ) dans laquelle ladite portion peut être amenée en engagement avec un élément guidé déterminé (32', 32'', 32‴, 32ʺʺ) et un réglage du chariot (8) peut être réalisé pendant que le chariot est positionné à un point déterminé le long de la section de transport (5), et une deuxième position de travail (15b', 15b'') dans laquelle l'élément guidé est libéré pendant que le chariot est positionné au point déterminé le long de la section de transport.

4. Système de transport selon la revendication 1, le réglage d'une portion de guidage (31a, 31a', 31a'', 31a''', 31b, 31c, 31d, 31e) étant effectué pendant qu'un élément guidé (32', 32'', 32''', 32'''') est en engagement avec à cette portion de guidage.

5. Système de transport selon l'une des revendications 1 à 4, un dispositif de commande étant prévu qui commande le réglage d'un élément de guidage (29) entre les positions de travail (15a', 15b', 15a'', 15b'', 15a''', 15b'''), le dispositif de commande commandant le réglage de l'élément de guidage en fonction d'un état de chargement d'un chariot (8) et/ou en fonction d'un type de pièce, pendant qu'au moins un élément guidé (32', 32ʺ, 32‴, 32ʺʺ) est en engagement avec une portion de guidage (31a, 31a', 31a", 31a‴, 31b, 31c, 31d, 31e).

6. Installation de traitement de surface comprenant un système de transport (2) selon l'une des revendications 1 à 5.

7. Procédé de mise en œuvre d'un système de transport (2) destiné à des pièces (12) et comprenant une section de transport (5), un système d'entraînement (7) et un chariot (8) qui est déplacé le long de la section de transport au moyen d'un système d'entraînement, une unité de guidage (11), qui comporte au moins deux éléments de guidage (29), étant associée au système d'entraînement et au chariot, un élément de guidage étant conçu comme une portion de guidage (31a, 31a', 31a", 31a‴, 31b, 31c, 31d, 31e) associée au système d'entraînement et un élément de guidage étant conçu comme un élément guidé (32', 32ʺ, 32‴, 32ʺʺ) associé au chariot, la portion de guidage et l'élément guidé étant en engagement l'un avec l'autre au moins par portions,
la section de transport comportant une portion de rail (16) le long de laquelle le chariot est déplacé, et le long de laquelle au moins un élément guidé (32', 32'', 32‴, 32ʺʺ) s'engage dans une portion de guidage (31a, 31a', 31a", 31a‴, 31b, 31c, 31d, 31e),
**caractérisé en ce que**
un dispositif de réglage (30) est prévu pour régler un élément de guidage entre au moins deux positions de travail et comporte un élément d'entraînement, une unité de transmission de force et/ou une portion de guidage de l'élément de guidage,
un élément de guidage pouvant être réglé entre au moins deux positions de travail (15a', 15b', 15aʺ, 15bʺ, 15a''', 15b''') au moyen du dispositif de réglage.

8. Procédé selon la revendication 7, un dispositif de commande commandant le réglage de l'élément de guidage (29) en fonction d'un état de chargement du chariot (8) et/ou en fonction d'un type de pièce placé sur le chariot.

9. Procédé selon l'une des revendications 7 ou 8, une portion de guidage (31a, 31a', 31aʺ, 31a''', 31b, 31c, 31d, 31e) étant réglée entre deux positions de travail (15a', 15b', 15aʺ, 15bʺ), la première position de travail (15a', 15a'') étant une position d'engagement dans laquelle l'élément guidé (32', 32ʺ, 32‴, 32'''') vient en engagement avec la portion de guidage lorsque la portion de guidage occupe la position d'engagement pendant que le chariot occupe une position déterminée le long de la section de transport et la deuxième position de travail (15b', 15b'') étant une position de non-engagement dans laquelle l'élément guidé ne vient éventuellement pas en engagement avec la portion de guidage pendant que le chariot occupe la même position déterminée le long de la section de transport, et l'élément guidé passant par la portion de guidage pendant que la portion de guidage occupe la position de non-engagement.

10. Procédé selon l'une des revendications 7 ou 8, une portion de guidage (31a, 31a', 31aʺ, 31a''', 31b, 31c, 31d, 31e) étant réglée pendant qu'un élément guidé (32', 32ʺ, 32‴, 32'''') est en engagement avec cette portion de guidage.

11. Procédé selon l'une des revendications 7, 8 ou 10, un réglage de la portion de guidage (31a, 31a', 31a'', 31a‴, 31b, 31c, 31d, 31e) ayant pour résultat une rotation de l'unité de rotation (22) du chariot (8) sur un axe de rotation (28).
